(19) Europäisches Patentamt / European Patent Office / Office européen des brevets

(11) EP 2 174 994 B1

(12) # EUROPEAN PATENT SPECIFICATION

(45) Date of publication and mention of the grant of the patent:
**02.01.2013 Bulletin 2013/01**

(51) Int Cl.:
***C09D 11/00*** *(2006.01)*

(21) Application number: **09172306.4**

(22) Date of filing: **06.10.2009**

(54) **Ink jet ink, ink jet recording method, and ink cartridge**

Tintenstrahltinte, Tintenstrahlaufzeichnungsverfahren und Tintenpatrone

Encre à jet d'encre, procédé d'enregistrement à jet d'encre, et cartouche d'encre

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **07.10.2008 JP 2008260617**

(43) Date of publication of application:
**14.04.2010 Bulletin 2010/15**

(73) Proprietor: **CANON KABUSHIKI KAISHA**
**Ohta-ku**
**Tokyo 146-8501 (JP)**

(72) Inventors:
- **Nishiguchi, Kenji**
  **Tokyo Tokyo 146-8501 (JP)**
- **Hayashi, Katsuhiro**
  **Tokyo Tokyo 146-8501 (JP)**

(74) Representative: **TBK**
**Bavariaring 4-6**
**80336 München (DE)**

(56) References cited:
**EP-A- 1 008 634** **EP-A- 1 770 131**
**US-A- 5 679 762**

- **AKIRA HIRAO ET AL.: "Synthesis of Well-Defined Star-Branched Polymers by Coupling Reaction..." MACROMOLECULES, vol. 37, 11 May 2004 (2004-05-11), pages 5179-5189, XP002564428**
- **HADDLETON D M ET AL: "SYNTHESIS OF METHACRYLIC MULTI-ARM STAR COPOLYMERS BY ARM-FIRST GROUP TRANSFER POLYMERISATION" MACROMOLECULAR CHEMISTRY AND PHYSICS, WILEY-VCH VERLAG, WEINHEIM, DE, vol. 198, no. 3, 1 March 1997 (1997-03-01), pages 871-881, XP000683674 ISSN: 1022-1352**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 174 994 B1

## Description

BACKGROUND OF THE INVENTION

Field of the Invention

The present invention relates to an ink jet ink, an ink jet recording method, and an ink cartridge.

Description of the Related Art

In conventional cases, a dye that can be dissolved in an aqueous medium in ink for use in ink jet recording has been mainly used as a coloring material in the ink; in recent years, investigations on the use of a pigment have been underway from the viewpoints of, for example, the light fastness and water resistance of an image. In each of Japanese Patent Application Laid-Open No. H03-190911, Japanese Patent Application Laid-Open No. H07-179538, Japanese Patent Application Laid-Open No. 2000-169771, and Japanese Patent Application Laid-Open No. 2001-040256, there is disclosed an ink jet ink containing a polymer having a star structure (star polymer).

SUMMARY OF THE INVENTION

However, an ink jet ink having the following characteristic has been heretofore absent: the ink can correspond to conditions severer than conventional ones so as to be applicable to, for example, an enlarged ink jet recording apparatus or a lengthened recording head. For example, in the ink containing a star polymer described specifically in Japanese Patent Application Laid-Open No. 2000-169771, sufficient ejection stability and storage stability could not be obtained. Further, the central skeleton of the star polymer described in Japanese Patent Application Laid-Open No. 2000-169771 cannot be isolated, and the polymer does not have a structure necessary for turning the polymer into a dispersion polymer.

When the ink containing a star polymer described specifically in Japanese Patent Application Laid-Open No. 2001-040256 was used, sufficient ejection stability and storage stability could not be obtained. Further, in the invention described in Japanese Patent Application Laid-Open No. 2001-040256, the star polymer is not used as a dispersion polymer, and the main purpose of the invention is to improve the fixing performance (scratch resistance or marker resistance) of the ink through the addition of the star polymer. In other words, the star polymer described in Japanese Patent Application Laid-Open No. 2001-040256 does not function as a dispersion polymer for a pigment either.

The star polymer described in Japanese Patent Application Laid-Open No. H07-179538 does not have a structure necessary for turning the polymer into a dispersion polymer. It should be noted that only Example 6 of this patent document describes a star polymer obtained by bonding, to a central skeleton, two or more first (co)polymer chains each containing an aromatic monomer unit and two or more second (co)polymer chains each containing at least one monomer unit of acid monomers or salts thereof. However, even when this star polymer was used, sufficient ejection stability and storage stability could not be obtained. It should be noted that the star polymer does not function as a dispersion polymer because the polymer contains an acid monomer or a salt thereof at a small content, and has a low acid value. In addition, the star polymer is inadequate for use as a dispersion polymer for dispersing a fine particle pigment like that in an ink jet ink because the number-average molecular weight of the star polymer is at least 10,000, which is a large value.

Also in the case of using the star polymer described specifically in Japanese Patent Application Laid-Open No. H03-190911, sufficient ejection stability and storage stability could not be obtained. The star polymer described in Japanese Patent Application Laid-Open No. H03-190911 does not have a structure necessary for turning the polymer into a dispersion polymer either. That is, the number of arms bonded to the central skeleton is not enough for the polymer to act as a dispersion polymer, and the structure of each arm is not suitable for a dispersion polymer.

Therefore, an object of the present invention is to provide an ink jet ink capable of achieving at a high level both ejection stability and storage stability. Another object of the present invention is to provide an ink jet recording method and an ink cartridge each using such ink jet ink.

The above objects are achieved by the present invention described below. That is, the present invention provides an ink jet ink, including at least: a pigment; and a star polymer in which four or more (co)polymer chains of an $\alpha,\beta$-ethylenically unsaturated monomer are bonded to a central skeleton, wherein the (co)polymer chains have two or more first (co)polymer chains each containing at least an aromatic monomer unit and two or more second (co)polymer chains each containing at least one monomer unit selected from the group consisting of acid monomers and salts of the acid monomers; and the star polymer has structures represented by the following formulae X and Y, where A in the following formula X represents the first (co)polymer chains, and B in the following formula Y represents the second (co)polymer chains:

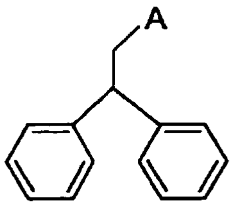

X

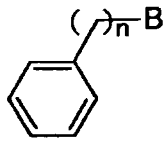

Y

where n represents an integer of 1 to 4.

In addition, the present invention provides an ink jet recording method including ejecting ink according to an ink jet system to perform recording on a recording medium, in which the ink used in the ink jet recording method is the ink jet ink of the present invention.

In addition, the present invention provides an ink cartridge including an ink storage portion for storing ink, in which the ink stored in the ink storage portion is the ink jet ink of the present invention.

According to the present invention there can be provided an ink jet ink capable of achieving at a high level both ejection stability and storage stability. In addition, according to another embodiment of the present invention, there can be provided an ink jet recording method and an ink cartridge each using such ink jet ink.

Further features of the present invention will become apparent from the following description of exemplary embodiments with reference to the attached drawings.

BRIEF DESCRIPTION OF THE DRAWINGS

FIG. 1 is a perspective view of an ink jet recording apparatus.

FIG. 2 is a perspective view illustrating a state where an ink cartridge is mounted on a head cartridge.

DESCRIPTION OF THE EMBODIMENTS

Hereinafter, the present invention is described in more detail by way of a preferred embodiment. It should be noted that an ink jet ink may be simply referred to as "ink" in the following description. In addition, when a compound is a salt, the compound may dissociate in an aqueous medium to exist in the form of an ion; this case is also included in the expression "contains a salt" for convenience in the present invention.

Described below is the reason why the inventors of the present invention have conducted investigations on the above problems of the prior art to reach the present invention. First, additionally high dispersion stability of a pigment needs to be secured in order that an ink containing the pigment can be applicable to, for example, an enlarged ink jet recording apparatus or a lengthened recording head as described above. To this end, the following conditions needs to be satisfied: a dispersion polymer adsorbing to the pigment has a sufficient repulsive force by virtue of an electrostatic repulsive force and a steric hindrance repulsive force, and the polymer adsorbing to the pigment hardly desorbs from the pigment in accordance with an abrupt environmental change caused by, for example, the heating or evaporation of the ink around an ejection nozzle.

In order that a dispersion polymer exerts an electrostatic repulsive force or a steric hindrance repulsive force more efficiently, a block polymer or graft polymer in which a hydrophilic segment and a hydrophobic segment are separated from each other has been conventionally used for such purpose. In contrast to the block polymer, the graft polymer is of a structure having multiple hydrophilic segments or multiple hydrophobic segments. For example, in the case of a graft polymer having hydrophilic segments bonded as multiple side chains to its main chain, the hydrophilic segments can be extended from the surface of a pigment toward an aqueous ink medium at a higher density than that in the case of a linear block polymer, so an additionally high level of stabilization of the dispersion of the pigment can be achieved. In contrast, in the case of a graft polymer using hydrophobic segments as its side chains, the polymer adsorbs to the surface of the pigment with the aid of the multiple hydrophobic segments, so the dispersion polymer hardly desorbs from the surface of the pigment, and a high level of stabilization of the dispersion can be achieved.

However, additionally high dispersion stability of a pigment that cannot be achieved even with any such graft polymer is needed in a recent recording apparatus, so there arises a need for stabilizing the dispersion of the pigment with a dispersion polymer having multiple hydrophilic segments and multiple hydrophobic segments.

In view of the foregoing, the inventors of the present invention have hit on an idea of using a star polymer having multiple hydrophilic segments and multiple hydrophobic segments as a dispersion polymer for solving such problems. Here, the inventors have thought that the dispersion polymer adsorbing to a pigment has a sufficient repulsive force by

virtue of an electrostatic repulsive force and a steric hindrance repulsive force, and the adsorbing polymer hardly desorbs from the pigment.

In addition to the above constitution, the constitution of the central skeleton of the star polymer of the present invention was employed, and further, the composition of (co)polymer chains bonded to the central skeleton was controlled, to thereby obtain remarkable effects of the present invention, that is, highly excellent ejection stability and storage stability. The reason therefor is not clear, but it can be presumed that the basic skeleton as the star polymer, the constitution of the central skeleton, and the constitution of the (co)polymer chains act synergistically with each other.

<Ink jet ink>

(Polymer having star structure (star polymer))

An ink of the present invention is an ink containing: a star polymer in which four or more specific (co)polymer chains are bonded to a central skeleton; and a pigment. The star polymer is a polymer having a star structure (star polymer) in which first (co)polymer chains and second (co)polymer chains are bonded to the central skeleton. In addition, the first (co)polymer chains each contain at least an aromatic monomer unit, and the second (co)polymer chains each contain at least one monomer unit selected from the group consisting of acid monomers and salts thereof (which may hereinafter be referred to as " acid monomer or salt thereof"). Further, the number of the first (co)polymer chains bonded to the central skeleton having a specific structure is two or more, and the number of the second (co)polymer chains bonded to the central skeleton is also two or more.

The term "star structure" as used in the present invention refers to a structure having a center and three or more lines radially extending from the center toward the outside. In addition, the term "star polymer (polymer having a star structure)" as used in the present invention refers to a polymer having a central skeleton and three or more (co) polymer chains radially extending from the central skeleton toward the outside.

In addition, the star polymer needs to have three or more (co)polymer chains bonded to the central skeleton. It should be noted that the "central skeleton" of the star polymer of the present invention means the structure of a part excluding the (co)polymer chains of which the star polymer is formed. In addition, the central skeleton itself of the star polymer of the present invention can be isolated. The compound obtained by the isolation has the central skeleton; in the present invention, the compound having the central skeleton is referred to as "central compound". In addition, the star polymer of the present invention, when used as a dispersion polymer for a pigment, can exert the following effect to the maximum extent: a high level both ejection stability and storage stability of the prepared ink can be achieved.

As the monomer for constituting the first (co)polymerization chain, an aromatic monomer is mentioned. Specific examples thereof include: styrene; vinylnaphthalene; vinylanthracene; benzyl (meth) acrylate; benzyl (meth)acrylamide; 2-phenoxyethyl (meth)acrylate; 2-hydroxy-3-phenoxy (meth)acrylate; and ester compounds of a substituted aromatic alcohol or amide compounds of a substituted aromatic amine with an $\alpha,\beta$-ethylenically unsaturated carboxylic acid such as 2-(meth)acryloyloxyethyl phthalic acid and benzyl (meth)acrylamide. Of those, in terms of improving dispersion stability, styrene and benzyl (meth)acrylate are preferably used. It should be noted that, in the present invention, "(meth) acrylate" means both "acrylate" and "methacrylate", and "(meth)acryloxy" means both "acryloxy" and "methacryloxy".

When the first (co)polymer chains each contain the aromatic monomer unit, the chains each function as an adsorbing group for the surface of the pigment. In the present invention, mass fraction of the aromatic monomer unit in each of the first (co)polymer chains is preferably 50.0 mass% or more, or more preferably 70.0 mass% or more with reference to all monomer units of which the first (co)polymer chain is formed; in addition, an upper limit for the mass fraction is preferably 100.0 mass% or less.

As the monomer for constituting the second (co)polymerization chain, an acid monomer and salts thereof are given. Specific examples thereof include vinyl compounds and salts thereof having an acid group such as (meth)acrylic acid, maleic acid, maleic acid derivatives, itaconic acid, itaconic acid derivatives, fumaric acid, fumaric acid derivatives, vinyl sulfonic acid, and vinyl phosphonic acid. Examples of salts include potassium salts, sodium salts, lithium salts, ammonium salts, and various organic quaternary ammonium salts of the above-described monomers. As the acid monomer and salts thereof, because the water solubility of the star polymer becomes high as a result of (co)polymerization, (meth)acrylic acid or a salt thereof is preferred, and as the salt, potassium salt and sodium salt is preferred. Further, an $\alpha,\beta$-ethylenically unsaturated carboxylic acid of methyl-, ethyl-, or butyl (meth)acrylate is used for (co)polymerization, followed by hydrolyzing an ester bond, and the resultant may be used as a (meth)acrylic acid or a salt thereof, which is an acid monomer or a salt thereof.

In the present invention, mass fraction of the acid monomer in each of the second (co)polymer chains is preferably 30.0 mass% or more with reference to all monomers of which the second (co)polymer chain is formed; in addition, an upper limit for the mass fraction is preferably 100.0 mass% or less.

When the second (co)polymer chains are each a (co)polymer of the acid monomer or the salt thereof, each of the chains has the following function: the chain applies an electrostatic repulsive force to the pigment to improve the dispersion stability of the pigment in the ink. In the present invention, the second (co)polymer chains each preferably have the acid monomer or the salt thereof at least at its terminal, that is, a terminal opposite to a terminal at which the chain is bonded to the central skeleton.

It should be noted that a monomer except those listed above can be used in combination with the monomers of which the (co)polymer chains of the star polymer used in the present invention are formed to such an extent that the achievement of the objects of the present invention is not inhibited. Specific examples of such monomers include: (meth) acrylates such as: methyl (meth)acrylate, ethyl (meth)acrylate, butyl (meth)acrylate, methoxyethyl (meth)acrylate, ethoxyethyl (meth)acrylate, hydroxyethyl (meth)acrylate, diethyleneglycol (meth)acrylate; triethyleneglycol (meth)acrylate, tetraethyleneglycol (meth)acrylate, polyethyleneglycol (meth)acrylate, methoxydiethyleneglycol (meth)acrylate, methoxytriethyleneglycol (meth)acrylate; methoxytetraethyleneglycol (meth)acrylate, methoxypolyethyleneglycol (meth)acrylate, cyclohexyl (meth)acrylate, isobornyl (meth)acrylate, and N,N-dimethylaminopropyl (meth)acrylate; (meth)acrylamides such as (meth)acrylamide, morpholine (meth)acrylamide, N-methylol (meth)acrylamide, and N-isopropyl (meth) acrylamide; and vinyl compounds such as N-vinylacetamide, N-vinylformamide, N-vinylpyridine, N-vinylpyrrolidone, and N-vinylcarbazole.

The star polymer is synthesized by bonding the (co)polymer chains of such monomers as listed above to the central compound. A method for the synthesis is, for example, living anion polymerization described in Macromolecules, 37, 5179 (2004), J. Polym. Sci., Part A: Polym. Chem., 2006, 44, 6659, or the like. In such cases, the central compound is a 1,1-diphenylethylene derivative.

The star polymer used in the present invention needs to satisfy the following conditions: the polymer contains at least both structures represented by the following formulae X and Y, each first (co)polymer chain is bonded as represented by A in the following formula X, and each second (co)polymer chain is bonded as represented by B in the following formula Y:

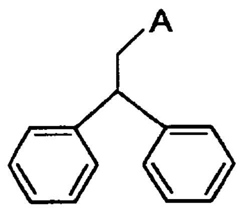
X

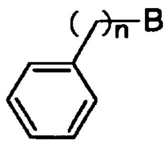
Y

where n represents an integer of 1 to 4.

Specific examples of the star polymer of the present invention include polymers represented by the following formulae. It should be noted that, in the following formulae, A represents the first (co)polymer chains, and B represents the second (co)polymer chains. It should be noted that a structure obtained by removing A's and B's in each of the following formulae is the central skeleton in the following formula.

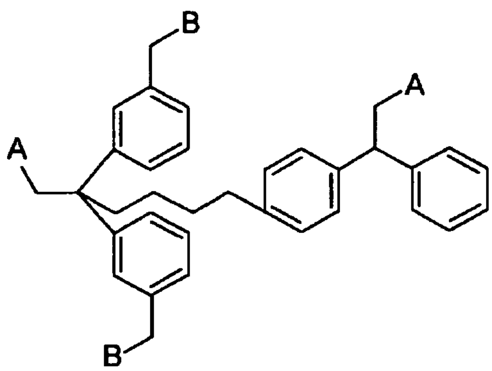

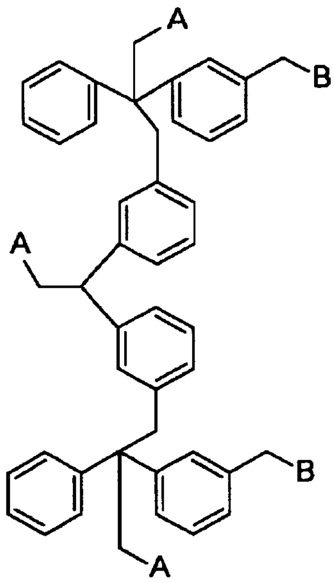

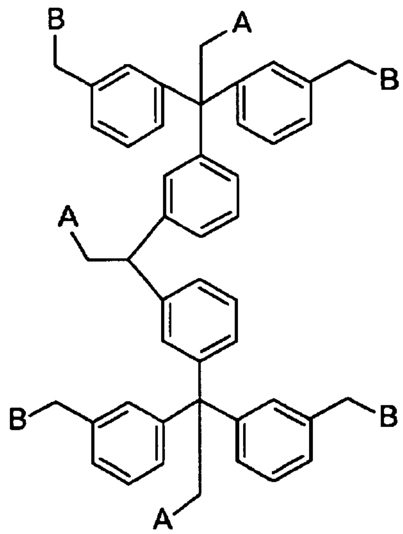

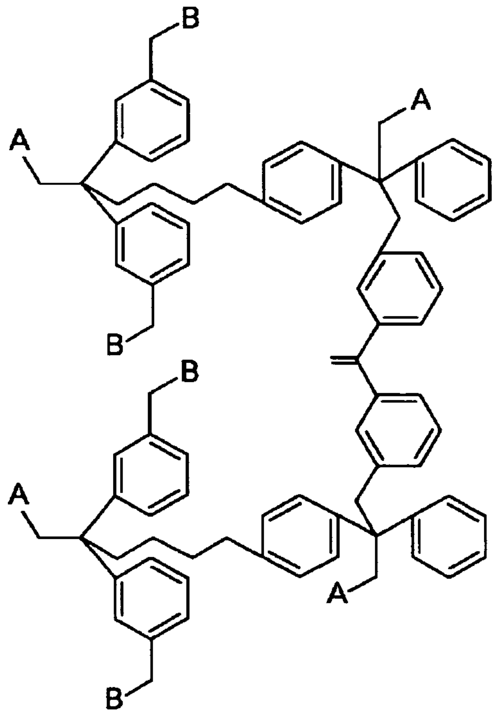

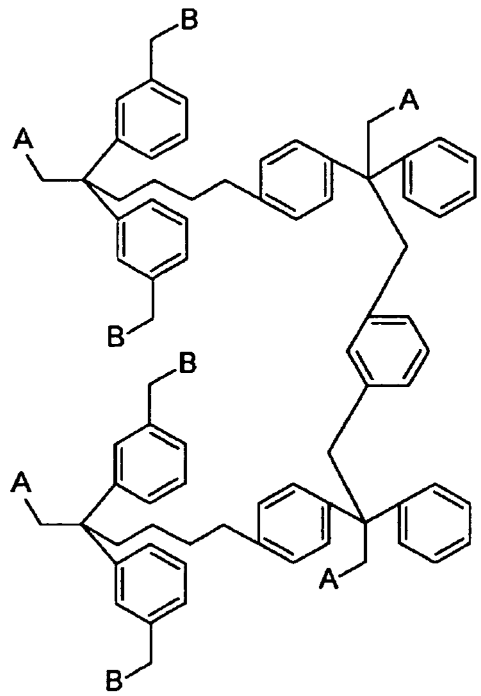

Alternatively, the first (co)polymer chains and the second (co)polymer chains may be polymerized by a combination of different living polymerization methods with compounds that serve as an initiator or a terminator for the different polymerization methods. An exemplary star polymer obtained when a living radical polymerization method and a living cation polymerization method are combined is represented by the following formula. In the following formula, A represents a (co)polymer chain synthesized by the living cation polymerization method, and B represents a (co)polymer chain synthesized by the living anion polymerization method. It should be noted that a portion obtained by removing A's and B's in the following formula is the central skeleton in the following formula.

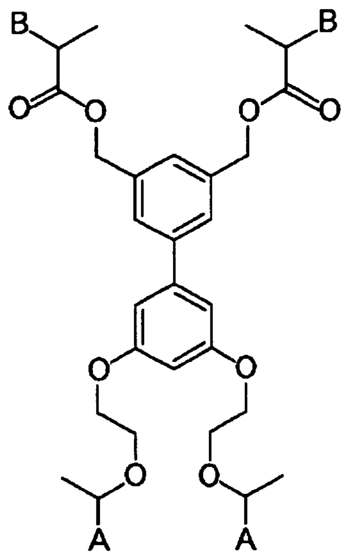

The star polymer used in the present invention has a number-average molecular weight (Mn) in terms of polystyrene obtained by gel permeation chromatography (GPC) of preferably 1,000 or more and 35,000 or less, more preferably 1,000 or more and 10,000 or less, or particularly preferably 2,000 or more and 10,000 or less. When the number-average molecular weight is less than 1,000, the adsorbing performance of the star polymer to the pigment reduces, so the ink cannot obtain sufficient ejection stability in some cases. On the other hand, when the above molecular weight exceeds 35,000, the steric hindrance repulsive force of the star polymer increases, so the pigment cannot be sufficiently dispersed in some cases, and hence the ink may be unable to obtain sufficient ejection stability or sufficient drying resistance.

In addition, the (co)polymer chains of the star polymer (hereinafter, the (co)polymer chains in the star polymer may be referred to as arms), that is, the first (co)polymer chains and the second (co)polymer chains each preferably have a number-average molecular weight of 400 or more and 3,000 or less. When the above molecular weight is less than 400, the adsorbing performance of the polymer to the pigment reduces, so the ink cannot obtain sufficient storage stability in some cases. In addition, when the above molecular weight exceeds 3,000, the molecular weight of the star polymer also increases, so the pigment cannot obtain sufficient dispersion stability in some cases.

In addition, the molecular weight distribution of the star polymer can be calculated from gel permeation chromatography (GPC) in terms of polystyrene of the star polymer. The molecular weight distribution of the star polymer obtained by GPC is the ratio of the weight-average molecular weight Mw of the polymer in terms of polystyrene to the number-average molecular weight Mn in terms of polystyrene. In the star polymer of the present invention, this ratio preferably satisfies the relationship of $1.0 \leq (Mw/Mn) \leq 1.5$. In principle, the molecular weight distribution Mw/Mn does not become lower than 1.0. However, when the molecular weight distribution exceeds 1.5, the molecular weight distribution widens, so there is an increasing possibility that a low-molecular-weight polymer molecule having a weak adsorbing force to the pigment and a high-molecular-weight polymer molecule that increases the steric hindrance repulsive force of the pigment are simultaneously present. Accordingly, the polymer may be unable to obtain a sufficient function as a polymer for dispersing the pigment.

In addition, with regard to the number of the arms of the star polymer, the adsorbing performance of the first (co)polymer chain to the pigment and second (co)polymer chain's function of stabilizing the dispersion of the pigment in an aqueous medium can be additionally improved when the number of the first (co)polymer chains and the number of the second (co)polymer chains are each two or more. Accordingly, the total number of the (co)polymer chains, i.e., of the first (co)polymer chains and the second (co)polymer chains, needs to be four or more. In addition, an upper limit for the number of the arms of the star polymer is preferably eight or less. When more than eight arms are bonded, the molecular weight of the star polymer increases, so the pigment cannot obtain sufficient dispersion stability in some cases. That is, in the present invention, the number of the arms of the star polymer is preferably four or more and eight or less.

The star polymer used in the present invention contains at least an aromatic monomer unit in each first (co) polymer chain. The mass fraction of the aromatic monomer units in the star polymer is preferably 30.0 mass% or more and 85.0 mass% or less, or more preferably 45.0 mass% or more and 85.0 mass% or less with reference to the total mass of the star polymer. When the mass fraction is less than 30.0 mass%, the adsorbing force of the star polymer to the surface of the pigment is not sufficient, so the pigment ink cannot obtain sufficient storage stability in some cases.

On the other hand, when the mass fraction exceeds 85.0 mass%, the water solubility of the star polymer reduces, so the pigment cannot obtain sufficient dispersion stability in some cases.

The star polymer used in the present invention contains at least a unit of acid monomers or salts thereof in each second (co)polymer chain. The fraction of the units of the acid monomers or the salts thereof in the star polymer can be represented with the acid value of the star polymer. In the present invention, the star polymer has an acid value of preferably 80 mgKOH/g or more and 250 mgKOH/g or less, or more preferably 100 mgKOH/g or more and 150 mgKOH/g or less. When the acid value falls short of the preferable range of the acid value, the dispersion stability and ejection stability of the ink cannot be sufficiently obtained in some cases. In addition, when the acid value exceeds the range, the adsorbing force of the star polymer to the surface of the pigment reduces, so the ink cannot obtain sufficient storage stability in some cases.

The mass fraction of the total of the aromatic monomer units and the units of the acid monomers or the salts thereof in the star polymer used in the present invention is preferably 45.0 mass% or more and 100.0 mass% or less with reference to the total mass of the arms in the star polymer. When the mass fraction falls within the above range, the balance between the storage stability and ejection stability of the ink can be made particularly suitable.

The pH of the ink of the present invention is preferably adjusted to fall within a neutral to alkaline range in order that the dispersion of the pigment may be stabilized with an electrostatic repulsive force of an anion produced by neutralizing an acidic group in the star polymer as described above. In this case, however, the ink may be responsible for the corrosion of various members used in an ink jet recording apparatus, so the pH is preferably adjusted to fall within the range of 7 to 10. A pH adjustor used in this case is, for example, any one of the following substances: various organic amines such as diethanolamine and triethanolamine; inorganic alkaline agents such as hydroxides of alkali metals including sodium hydroxide, lithium hydroxide, and potassium hydroxide; organic acids; and mineral acids. Such a star polymer as described above is dispersed or dissolved in an aqueous medium.

The content (mass%) of the star polymer in the ink is preferably 0.1 mass% or more and 15.0 mass% or less with reference to the total mass of the ink. In particular, when the star polymer is used as a dispersion polymer for the pigment, the content (mass%) of the star polymer in the ink is preferably 0.1 mass% or more and 5.0 mass% or less with reference to the total mass of the ink. It should be noted that a natural resin such as rosin, shellac, or starch, or a synthetic resin except the star polymer can be used as another dispersion polymer in combination with the above dispersion polymer to such an extent that the achievement of the objects of the present invention is not inhibited. The content of the resin except the star polymer in that case is preferably at most about the content of the star polymer.

(Pigment)

A coloring material used in the ink of the present invention is a pigment, and the pigment is particularly preferably dispersed in an aqueous medium with the star polymer described above. The content (mass%) of the pigment in ink is preferably 1.0 mass% or more and 20.0 mass% or less, or more preferably 2.0 mass% or more and 12.0 mass% or less with reference to the total mass of the ink. Carbon black or an organic pigment is preferably used as the pigment. One kind of a pigment may be used alone, or two or more kinds of pigments may be used in combination.

As the black pigment, it is preferred to use carbon black such as furnace black, lamp black, acetylene black, and channel black as the pigment. The carbon black preferably has characteristics including a primary particle diameter of 11 nm or more and 40 nm or less, a specific surface area by the BET method of 50 $m^2$/g or more and 400 $m^2$/g or less, a volatile content of 0.5 mass% or more and 10 mass% or less, and a pH value of 2 to 10. As the black pigment, commercially available products and the like can be used.

In addition, carbon black newly prepared can also be used as the black pigment. Other than carbon black, a magnetic substance fine particle such as magnetite or ferrite, titanium black, or the like may also be used as the black pigment.

As the organic pigment, there is no particular limitation and a known organic pigment can be used. Specific examples thereof include organic pigments represented by color index (C.I.) numbers.

(Aqueous medium)

The ink used in the present invention preferably contains an aqueous medium which is a mixed medium of water and a water-soluble organic solvent. Ion-exchanged water (deionized water) is preferably used as water instead of general water containing various ions. The water content (mass%) in the ink is preferably 10.0 mass% or more and 90.0 mass% or less, or more preferably 30.0 mass% or more and 80.0 mass% or less with reference to the total mass of the ink. In addition, the content (mass%) of the water-soluble organic solvent in the ink is preferably 3.0 mass% or more and 50.0 mass% or less, or more preferably 3.0 mass% or more and 40.0 mass% or less with reference to the total mass of the ink. As the water-soluble organic solvent, there can be used a known water-soluble organic solvent that can be used for an ink jet ink.

(Other components)

An additive such as a surfactant, a defoaming agent, or an antiseptic as well as the above components can be appropriately added as required to the ink of the present invention in order that the ink has desired physical property values. The content (mass%) of such additive in the ink is preferably 0.05 mass% or more and 10.0 mass% or less, or

more preferably 0.2 mass% or more and 5.0 mass% or less with reference to the total mass of the ink.

(Method of preparing ink)

A method of preparing the ink of the present invention formed of such components as described above can be such a method as described below. First, the pigment is added to a mixture obtained by mixing at least a star polymer and water, and the resultant is mixed and stirred. After that, the mixture is subjected to a dispersion treatment with a dispersing unit, and is then subjected to a centrifugation treatment as required so that a pigment dispersion liquid can be obtained. Further, for example, an aqueous medium or any such appropriately selected additive as listed above is added as required to the pigment dispersion liquid, and the mixture is stirred. Thus, the ink of the present invention is obtained.

It should be noted that the dispersion stability of the ink can be additionally improved by adding a base for dissolving the star polymer used in the present invention upon preparation of the pigment dispersion liquid. Examples of the base include: organic amines such as monoethanolamine, diethanolamine, triethanolamine, amine methyl propanol, and ammonia; and inorganic bases such as potassium hydroxide, sodium hydroxide, and lithium hydroxide.

As described above, the ink of the present invention is prepared by using the pigment dispersion liquid obtained through the dispersion treatment. Prior to the dispersion treatment performed upon preparation of the pigment dispersion liquid, performing a premixing process in which the pigment is added to the mixture obtained by mixing at least the star polymer and water is effective. That is, such premixing operation is preferable because the wettability of the surface of the pigment can be improved, and the adsorption of a dispersant to the surface of the pigment can be promoted.

Any dispersing machine as generally used can be used in the above-mentioned dispersing treatment of pigments. Examples of the dispersing machine include a ball mill, a roll mill, a sand mill, a beads mill, and an ultra-high pressure homogenizer. Of those, the beads mill and the ultra-high pressure homogenizer are preferably used. Specific examples of those dispersers include SUPER MILL, SUPER APEX MILL, NANOMISER, AGITATOR MILL, GLEN MILL, DYNO MILL, PEARL MILL, and COBOL MILL (all of which are trade names).

In order that the ink of the present invention is suitably usable in an ink jet recording method, a pigment having an optimum particle size distribution is preferably used from the viewpoint of, for example, the resistance of a recording head against clogging with the ink. A method of obtaining a pigment having a desired particle size distribution is, for example, any one of the following approaches: an approach involving reducing the size of the pulverization medium of any such dispersing machine as listed above; an approach involving increasing the filling rate of the pulverization medium; an approach involving lengthening the treatment time; an approach involving performing classification with a filter, a centrifugal separator, or the like after pulverization; an approach involving increasing the number of times of treatment with an ultra-high pressure homogenizer or increasing the pressure at which the treatment is performed; and a combination of two or more of those approaches.

<Set of ink and reaction liquid>

The ink of the present invention is preferably used in combination with a reaction liquid having the following action to serve as a set of the ink and the reaction liquid: upon contact with the ink on a recording medium, the reaction liquid increases the average particle size of the pigment in the ink, that is, destabilizes the dispersed state of the pigment in the ink. A recorded article having an additionally high image density or additionally high color developing performance can be obtained by performing recording with the set of the ink and the reaction liquid. Hereinafter, the reaction liquid used in the present invention is described.

(Reaction agent)

A compound (reaction agent) used in the reaction liquid having an action of increasing the average particle size of the pigment in the ink, that is, destabilizing the dispersed state of the pigment in the ink is, for example, a polyvalent metal ion or a cationic polymer. Any such reaction agent reacts with the pigment in the ink to exert an action of increasing the average particle size of the pigment, that is, destabilizing the dispersed state of the pigment.

Specific examples of a polyvalent metal ion include: divalent metal ions such as $Ca^{2+}$, $Cu^{2+}$, $Ni^{2+}$, $Mg^{2+}$, $2n^{2+}$, $Sr^{2+}$, and $Ba^{2+}$; and trivalent metal ions such as $Fe^{3+}$, $Al^{3+}$, $Cr^{3+}$, and $Y^{3+}$. In order to incorporate the polyvalent metal ion into a reaction liquid, a polyvalent metal salt is used. The polyvalent metal salt refers to a salt formed of each of the polyvalent metal ions listed above and an anion bonded to the ion, which needs to be soluble in water. Examples of a preferable anion for forming a salt include $Cl^-$, $NO_3^-$, $I^-$, $Br^-$, $ClO_3^-$, $SO_4^{2-}$, $CO_3^{2-}$, $CH_3COO^-$, and $HCOO^-$. The content (mass%) of the polyvalent metal ion in the reaction liquid is preferably 0.01 mass% or more and 10.0 mass% or less with respect to the total mass of the reaction liquid.

Specific examples of the cationic polymer include polyallylamine, polyethyleneimine, an epichlorohydrin/dimethylamine polymer, polydimethyldiallylammonium chloride, a dicyandiamide/diethylenetriamineammonium chloride condensate, and a guanidinium formaldehyde condensate. The content (mass%) of cationic polymers in a reaction solution is preferably 0.01 mass% or more and 10.0 mass% or less in terms of the total mass of the reaction solution.

(Aqueous medium)

The reaction liquid used in the present invention preferably contains an aqueous medium which is a mixed medium of water and a water-soluble organic solvent. Ion-exchanged water (deionized water) is preferably used as

water instead of general water containing various ions. The water content (mass%) in the reaction liquid is preferably 25.0 mass% or more and 95.0 mass% or less with reference to the total mass of the reaction liquid. In addition, the content (mass%) of the water-soluble organic solvent in the reaction liquid is preferably 5.0 mass% or more and 60.0 mass% or less, or more preferably 5.0 mass% or more and 40.0 mass% or less with reference to the total mass of the ink. Any one of the solvents that can be incorporated into the ink described above can be used as the water-soluble organic solvent used in the reaction liquid.

(Other components)

An additive such as a surfactant, a viscosity modifier, a pH adjustor, an antiseptic, or an antioxidant may be further appropriately blended as required into the reaction liquid used in the present invention. Selection and addition amount of a surfactant functioning as a permeation promoter are preferably determined in such a proper manner that the permeability of the reaction liquid for a recording medium is suppressed. Further, the reaction liquid used in the present invention is more preferably colorless; the reaction liquid may be of such a pale color that the reaction liquid does not change the color tone of the ink upon contact and mixing with the ink on the recording medium. Further, the viscosity at 25°C of the reaction liquid is preferably adjusted to fall within the range of 1 mPa·s or more to 30 mPa·s or less.

(Method of applying reaction liquid)

A method of applying the reaction liquid used in the present invention to a recording medium is, for example, a method of using an ink jet recording system as in the case of the ink or a method of applying the reaction liquid to the recording medium with a roller or the like. In the present invention, the reaction liquid is particularly preferably applied so that at least a region where the ink is applied can be included on the recording medium. In addition, the order of application of the reaction liquid and the ink to the recording medium is arbitrary; the ink is particularly preferably applied after the reaction liquid has been applied in advance.

<Ink jet recording method>

An ink jet recording method of the present invention includes ejecting ink according to an ink jet system to perform recording on a recording medium, and is **characterized in that** the ink used in the ink jet recording method is the ink of the present invention. Examples of the ink jet system used in the ink jet recording method of the present invention include a recording method involving applying mechanical energy to ink to eject the ink and a recording method involving applying thermal energy to ink to eject the ink. An ink jet recording method involving the utilization of thermal energy can be particularly preferably used in the present invention.

<Ink jet recording apparatus>

An ink jet recording apparatus of the present invention includes an ink storage portion for storing ink and a recording head for ejecting the ink, and is **characterized in that** the ink stored in the ink storage portion is the ink of the present invention. An additionally significant effect can be obtained particularly when the ink jet recording apparatus is such that the recording head ejects the ink by applying thermal energy to the ink.

Hereinafter, the schematic constitution of the mechanism portion of the ink jet recording apparatus is described. FIG. 1 is a perspective view of an ink jet recording apparatus. The ink jet recording apparatus is formed of a sheet feeding portion, a conveying portion, a carriage portion, a sheet discharge portion, and a cleaning portion, and an external packaging portion M7030 for protecting them and providing them with designs to achieve a role of each mechanism. The ink jet recording apparatus includes a sheet feeding tray M2060 constituting the sheet feeding portion and a sheet discharge tray M3160 constituting the sheet discharge portion. The sheet feeding portion, the conveying portion, the carriage portion, the sheet discharge portion, and the cleaning portion are not particularly limited and any usable one can be used.

<Constitution of recording head>

The constitution of a head cartridge H1000 is described (see FIG. 2). The head cartridge H1000 has the recording head H1001, a unit for mounting the ink cartridges H1900, and a unit for supplying ink from the ink cartridges H1900 to the recording head, and the head cartridge H1000 is attachably and detachably mounted on a carriage.

FIG. 2 is a view illustrating the manner in which the ink cartridges H1900 are mounted on the head cartridge H1000. The ink jet recording apparatus forms an image with, for example, seven kinds of inks. Therefore, the ink cartridges H1900 are also independently prepared for seven colors. In addition, as illustrated in FIG. 2, each ink cartridge is removable from the head cartridge H1000. It should be noted that the ink cartridges H1900 can be attached or detached in a state where the head cartridge H1000 is mounted on a carriage.

The ink jet recording apparatus is not limited to an apparatus in which a recording head and an ink cartridge are separated, and an apparatus in which the recording head and the ink cartridge are integrated so as to be unseparable may be used as the apparatus. Further, the ink cartridge may be separably or unseparably integrated with the recording head to be mounted on the carriage, or may be provided for a fixed site of the ink jet recording apparatus to supply ink to the recording head through an ink supply member such as a tube. In addition, when the ink cartridge is provided with a constitution for applying a preferable negative pressure to the recording head, for example, the following constitution can be adopted: an absorber is placed in an ink storage portion of the ink cartridge, or the ink cartridge has a flexible ink storage bag and a spring portion that applies, to the bag, a bias in the direction in which the internal volume of the

bag is expanded. In addition, the ink jet recording apparatus may adopt such a serial recording system as described above, or may be in the form of a line printer obtained by aligning recording elements over the range corresponding to the entire width of a recording medium.

Examples

Hereinafter, the present invention is described more specifically by way of examples and comparative examples. It should be noted that, in the following description, the terms "part(s)" and "%" mean "part(s) by mass" and "mass%", respectively unless otherwise stated.

The following abbreviations refer to the following respective compounds.

THF: tetrahydrofuran
BzMA: benzyl methacrylate
BzMAm: N-benzyl methacrylamide
nBMA: n-butyl methacrylate
tBMA: t-butyl methacrylate
MAA: methacrylic acid
AA: acrylic acid
St: styrene
Ip: isoprene
DPMP: dipentaerythritol hexakis(3-mercaptopropionate) (molecular weight of 787)
TMMP: trimethylolpropane tris(3-mercaptopropionate) (molecular weight of 398)
PEMG: pentaerythritol tetrakis(2-mercaptoglycolate) (molecular weight of 432)
V-59: 2,2'-azobis(2-methylbutyronitrile) (manufactured by Wako Pure Chemical Industries, Ltd.)
tBuLi: tert-butyl lithium
iBuLi: i-butyl lithium
sBuLi: sec-butyl lithium
PEG 1,000: polyethylene glycol (average molecular weight of 1,000)
AE 100: acetylene glycol ethylene oxide adduct (manufactured by Kawaken Fine Chemicals Co., Ltd.)

<Preparation of polymer aqueous solution>

(Polymer 1)

A polymer 1 was synthesized in accordance with Scheme 1 described in Macromolecules, 37, 5179 (2004). The arms $A_2$ and C of the $A_2B_2C$ star polymer of Scheme 1 are identical to each other, the arm $A_2$ of the polymer is a first (co)polymer chain (polystyrene chain), and the arm $B_2$ of the polymer is a second (co)polymer chain.

[Stage 1: synthesis of polymer 1-a]

First, a polymer 1-a having a polymer chain formed of an aromatic monomer was synthesized by an anion polymerization method. The polymerization apparatus used here was such apparatus utilizing a break seal and a vacuum line as illustrated in FIG. 2.7 on page 212 of "New Polymer Experiment 2", Synthesis and Reaction of Polymer (1) Synthesis of Addition Polymer, edited by the Society of Polymer Science (Kyoritsu Shuppan Co., Ltd.). After a vacuum pump had been actuated to reduce the pressure in the polymerization apparatus, a break seal of 'a' was burnt so that a vacuum atmosphere was established in the polymerization apparatus. A 10% solution of sBuLi in THF was put into a sample tube I, and THF was put into a flask S. The break seal of each of the tube and the flask was broken, and 6 parts of sBuLi and 100 parts of THF were loaded into a flask R. Then, the temperature in the flask R was set to -78°C. Next, 23 parts of St which was an aromatic monomer were injected as a monomer from a flask A into the flask R by breaking the break seal of the flask A, and the mixture was subjected to a polymerization reaction for 1 hour. After the reaction, 35 parts of a 10% solution of 1,1-bis(3-(dimethyl-tert-butyl-siloxymethyl)phenyl)ethylene (SPE) in THF was put from a flask B into the flask R by breaking the break seal of the flask B, and the mixture was subjected to a termination reaction for 30 minutes. After the termination reaction, a dimethyl-tert-butyl-siloxymethylphenyl group at a terminal of the polymer was transformed into a bromomethylphenyl group with LiBr-trimethylchlorosilane so that the polymer terminal was transformed into DBPE. After that, the break seal of the flask R was broken, and the resultant polystyrene solution was collected.

The molecular weight of the polymer 1-a thus obtained was measured with a gel permeation chromatograph provided with a differential refractometer (manufactured by TOSOH CORPORATION) by using polystyrene as a standard substance and THF as a solvent. The polymer 1-a had a number-average molecular weight of 2,200, a weight-average molecular weight of 2,400, and a molecular weight distribution Mw/Mn of 1.09. NMR measurement confirmed that a polystyrene chain was added to an ethylene group derived from DBPE, and one bromine atom remained per molecule of the polymer. Therefore, the polymer 1-a is a macro-terminator having a bromine atom derived from DBPE at a terminal of its molecular chain.

[Stage 2: synthesis of polymer 1-b]

Subsequently, a polymer 1-b having a (co)polymer chain containing an acid monomer was synthesized with

the same apparatus as that described above. A polymerization reaction was performed in a THF solvent with sBuLi as an initiator and tBMA which was turned into an acid monomer by hydrolysis as a monomer at -78°C for a reaction time of 30 minutes by injecting 21 parts of tBMA from the flask A into the flask R. Subsequently, 15 parts of nBMA were injected from the flask B into the flask R, and the mixture was subjected to a polymerization reaction at -78°C for a polymerization time of 30 minutes. Then, 70 parts of a 10% solution of 1-(4-(4-bromobutyl)phenyl)-1-phenylethylene (BPPE) in THF was injected as a polymerization terminator from a flask C (not illustrated but having the same shape as that of the flask B) into the flask R by breaking the break seal of the flask C, and the mixture was subjected to a termination reaction for 30 minutes. The break seal of the flask R was broken, and the resultant solution of a polymer 1-b was collected.

The molecular weight of the polymer 1-b thus obtained was measured by the above method. The measurement showed that the polymer had a number-average molecular weight Mn of 1,800, a weight-average molecular weight Mw of 2,000, and a molecular weight distribution (Mw/Mn) of 1.11. A (co)polymer chain in which tBMA which had been previously polymerized (which could be turned into MAA (acid monomer) by a subsequent hydrolysis reaction) was copolymerized at a terminal opposite to the polymerization terminator (which could serve as a central skeleton later) was formed because the polymerization was performed by a living polymerization method. NMR measurement confirmed that a bromine atom of BPPE disappeared, and a double bond derived from ethylene remained.

[Stage 3: synthesis of polymer 1]

Polystyrene was synthesized by performing polymerization in the same apparatus as that in the case of the polymer 1-a with THF as a polymerization solvent, 12 parts of sBuLi as an initiator, and 42 parts of St as a monomer at -78°C for 1 hour. Subsequently, 54 parts of a 50% solution of the polymer 1-b in THF was injected from the flask B into the apparatus by breaking the break seal of the flask B, and the mixture was subjected to a reaction at -78°C for 30 minutes. The polymerized polystyrene chain was added to an ethylenic double bond of the polymer 1-b. Thus, a macro-anion 1 was synthesized. Subsequently, 46 parts of a 50% solution of the polymer 1-a as a macro-terminator in THF was injected from the flask C into the apparatus by breaking the break seal of the flask C so that two molecules of the macro-anion were added to two bromine atoms in one molecule of the polymer 1-a. Methanol and hydrochloric acid were added to the polymer 1 obtained by the reaction so that the reaction was terminated.

Simultaneously with the termination, tBMA as a polymerized monomer was hydrolyzed so as to become MAA as an acid monomer.

The polymer 1 had a number-average molecular weight of 5,000, a weight-average molecular weight of 5,500, and a molecular weight distribution Mw/Mn of 1.10. NMR measurement confirmed that the bromine atoms of the polymer 1-a and the ethylenic double bond of the polymer 1-b disappeared. Thus, a star polymer 1 having three polystyrene chains as first polymer chains and two second polymer chains each obtained by copolymerizing the acid monomer (MAA) was synthesized. In addition, the resultant polymer 1 had an acid value of 118 mgKOH/g. An equivalent molar amount of KOH with respect to the acid value of the polymer 1 and an appropriate amount of water were added to a solution of the polymer 1 in THF, and the mixture was stirred. After that, THF was removed under a reduced pressure condition, and further, water was added to the remainder. Thus, a 25% polymer aqueous solution 1 was obtained.

In addition, polymers 2 to 5 in each of which the number-average molecular weight Mn of each arm was changed were synthesized by using the monomers, the polymerization terminator, and the polymerization method used for the polymer 1. The following table shows the respective physical properties of the polymers 2 to 5. Upon synthesis of each of the polymers 2 to 5, the fraction of the polymerization terminator to the amount of the monomer was adjusted so that the first and second (co)polymer chains had a number-average molecular weight listed in the column "number-average molecular weight Mn of arm" in Table 1 below. An equivalent molar amount of KOH with respect to the acid value of each of the polymers 2 to 5 and an appropriate amount of water were added to a solution of the polymer in THF, and the mixture was stirred. After that, water was further added to the mixture. Thus, 25% polymer aqueous solutions 2 to 5 were obtained. Table 1 below shows the respective physical properties of the polymers 1 to 5 collectively.

Table 1

| | Polymer 1 | Polymer 2 | Polymer 3 | Polymer 4 | Polymer 5 |
|---|---|---|---|---|---|
| Number-average molecular weight of entire polymer (Mn) | 5,000 | 2,000 | 2,500 | 8,000 | 8,500 |
| Weight-average molecular weight of entire polymer (Mw) | 5,500 | 2,200 | 2,800 | 9,000 | 9,500 |
| Molecular weight distribution of entire polymer (Mw/Mn) | 1.10 | 1.10 | 1.12 | 1.13 | 1.12 |
| Number-average molecular weight of arm (Mn) | 2,200 (polymer 1-a) | 350 | 400 | 3,000 | 3,100 |
| | 1,800 (polymer 1-b) | | | | |

(continued)

| | Polymer 1 | Polymer 2 | Polymer 3 | Polymer 4 | Polymer 5 |
|---|---|---|---|---|---|
| Acid value [mgKOH/g] | 118 | 82 | 87 | 122 | 119 |

(Polymers 6 to 9)

Polymers 6 to 9 in each of which the number of arms was changed from that of the polymer 1 were synthesized. An equivalent molar amount of KOH with respect to the acid value of each of the polymers 6 to 9 and an appropriate amount of water were added to a solution of the polymer in THF, and the mixture was stirred. After that, water was further added to the mixture. Thus, 25% polymer aqueous solutions 6 to 9 were obtained. Table 2 below shows the respective physical properties of the polymers 6 to 9 collectively. It should be noted that Table 2 shows the respective physical properties of the polymer 1 synthesized in the foregoing as well.

(Polymer 6)

<Stage 1: synthesis of polymer 6-a>

After polymerization of the polystyrene chains in the polymerization of the polymer 1-a, the polystyrene chain was caused to react with an SPE solution. After that, the resultant was further caused to react with 35 parts of a 10% solution of BPPE in THF at -78°C for 30 minutes. The break seal was broken, and the resultant polystyrene solution was collected.

<Stage 2: synthesis of polymer 6-b>

After polystyrene had been synthesized by the same method as a polymerization method for the polymer 1-a, the above polymer 6-a was used as a polymerization terminator. The break seal was broken, and the resultant polystyrene solution was collected. As in the case of the polymer 1-a, a silanol group derived from SPE was transformed into a Br group.

<Stage 3: synthesis of polymer 6>

(Co)polymer chains of tBMA and nBMA were polymerized in the same manner as in the case of the polymer 1-b. After that, the polymer 6 was synthesized by adding the polymer 6-b as a polymerization terminator instead of the polymer 1-a in the polymer 1. Operations after the termination reaction are in conformity with those in the case of the polymer 1.

(Polymer 7)

Polymer 7 was synthesized in accordance with Scheme 3 of Macromolecules, 37, 5179 (2004).

<Stage 1: synthesis of polymer 7-a>

First, (co)polymer chains of tBMA and nBMA were synthesized in the same manner as in the case of the polymer 1-b, and were then caused to react with DBPE. Thus, polymer 7-a was synthesized.

<Stage 2: synthesis of polymer 7-b>

First, polystyrene was synthesized in the same manner as in the case of the polymer 1-a, and was then caused to react with polymer 7-a. Thus, polymer 7-b was synthesized.

<Stage 3: synthesis of polymer 7>

The polystyrene synthesized in Stage 1 and the polymer 7-b synthesized in Stage 2 were caused to react with each other. Thus, polymer 7 was synthesized. Operations after the termination reaction were performed in the same manner as in the case of the polymer 1.

(Polymer 8)

(Polymer 8-a)

(Co)polymer chains of tBMA and nBMA were synthesized in the same manner as in the case of the polymer 1-b. After that, polymer 8-a was obtained by adding the polymer 6-a as a polymerization terminator instead of the polymer 1-a in the polymer 1.

<Synthesis of polymer 8>

Polystyrene was synthesized in the same manner as in the case of the polymer 1-a. The polymer 8-a was added as a polymerization terminator to the polystyrene, and 1,1-bis(3-bromomethylphenyl)ethylene (DBPE) was added to the mixture so that the polystyrene was dimerized. Thus, polymer 8 was obtained.

(Polymer 9)

Polymer 9 was synthesized in accordance with Scheme 2 of Macromolecules, 37, 5179 (2004).

(Polymer 9-a)

After the polymer 1-a had been synthesized, polymer 9-a was synthesized in accordance with PS(BnBr)4 in Scheme 2 of Macromolecules, 37, 5179 (2004).

<Synthesis of polymer 9>

Four molecules of the macro-anion 1 in the polymer 1 were caused to react with the polymer 9-a. Subsequent operations were performed in the same manner as in the case of the polymer 1.

Table 2

| | | Polymer | | | | |
|---|---|---|---|---|---|---|
| | | 1 | 6 | 7 | 8 | 9 |
| First (co)polymer chain | Number of chains | 3 | 2 | 3 | 4 | 5 |
| | Number-average molecular weight (Mn) | 2,200 | 1,650 | 1,600 | 1,700 | 1,300 |
| Second (co)polymer chain | Number of chains | 2 | 2 | 4 | 4 | 4 |
| | Number-average molecular weight (Mn) | 1,800 | 900 | 880 | 1,000 | 1,000 |
| Total number of arms | | 5 | 4 | 7 | 8 | 9 |
| Number-average molecular weight of entire polymer (Mn) | | 5,000 | 2,800 | 4,500 | 5,500 | 6,500 |
| Weight-average molecular weight of entire polymer (Mw) | | 5,500 | 3,300 | 5,300 | 6,500 | 7,800 |
| Molecular weight distribution of entire polymer (Mw/Mn) | | 1.10 | 1.18 | 1.18 | 1.18 | 1.20 |
| Acid value [mgKOH/g] | | 118 | 116 | 116 | 116 | 110 |

(Polymers 10 to 12)

Polymers 10 to 12 in each of which the content of the aromatic monomer in each first polymer chain was changed from that of the polymer 7 were synthesized. Each polymer was synthesized in accordance with the method for the polymer 7, and the composition of each first (co)polymer chain, the number of first (co)polymer chains and the number of second (co)polymer chains, and the number-average molecular weights Mn of these chains were set as shown in Table 3 below. An equivalent molar amount of KOH with respect to the acid value of each of the polymers 10 to 12 and an appropriate amount of water were added to a solution of the polymer in THF, and the mixture was stirred. After that, water was further added to the mixture. Thus, 25% polymer aqueous solutions 10 to 12 were obtained. Table 3 below shows the respective physical properties of the polymers 10 to 12 collectively. It should be noted that Table 3 shows the respective physical properties of the polymer 7 synthesized in the foregoing as well.

Table 3

| | | Polymer | | | |
|---|---|---|---|---|---|
| | | 7 | 10 | 11 | 12 |
| Polymer composition fraction in first (co)polymer chain (parts) | Aromatic monomer (St) | 100 | 34 | 35 | 50 |
| | Non-aromaticmonomer (Ip) | 0 | 36 | 35 | 20 |
| Content of aromatic monomer in first (co)polymer chain [%] | | 100 | 49 | 50 | 71 |
| First (co)polymer chain | Number of chains | 3 | 3 | 3 | 3 |
| | Number-average molecular weight (Mn) | 1,600 | 1,600 | 1,600 | 1,600 |
| Second (co)polymer chain | Number of chains | 4 | 4 | 4 | 4 |
| | Number-average molecular weight (Mn) | 880 | 880 | 880 | 880 |
| Total number of arms | | 7 | 7 | 7 | 7 |
| Number-average molecular weight of entire polymer (Mn) | | 4,500 | 4,400 | 4,400 | 4,500 |
| Weight-average molecular weight of entire polymer (Mw) | | 5,300 | 5,000 | 5,000 | 5,300 |
| Molecular weight distribution of entire polymer (Mw/Mn) | | 1.18 | 1.14 | 1.14 | 1.18 |
| Acid value [mgKOH/g] | | 116 | 116 | 116 | 116 |

(Polymer 13)

A polymer 13 is a star polymer in which no acid monomer is bonded to a terminal opposite to a terminal bonded

to the central skeleton. To be specific, the polymer was synthesized as described below. The polymer 13 was synthesized in the same manner as in the method of synthesizing the polymer 1 except that, with regard to the order of polymerization of the two kinds of monomers (tBMA and nBMA) of the polymer 1-b, nBMA was injected in advance before tBMA was injected. An equivalent molar amount of KOH with respect to the acid value of the polymer 13 and an appropriate amount of water were added to a solution of the polymer in THF, and the mixture was stirred. After that, water was further added to the mixture. Thus, a 25% polymer aqueous solution 13 was obtained. Table 4 below shows the respective physical properties of the polymer 13 collectively.

Table 4

| | | Polymer 13 |
|---|---|---|
| First (co)polymer chain | Number of chains | 3 |
| | Number-average molecular weight (Mn) | 2,200 |
| Second (co)polymer chain | Number of chains | 2 |
| | Number-average molecular weight (Mn) | 1,800 |
| Total number of arms | | 5 |
| Number-average molecular weight of entire polymer (Mn) | | 4,500 |
| Weight-average molecular weight of entire polymer (Mw) | | 5,000 |
| Molecular weight distribution of entire polymer (Mw/Mn) | | 1.11 |
| Acid value [mgKOH/g] | | 118 |

(Polymers 14 and 15)

Polymers 14 and 15 each refer to the case where the molecular weight distribution Mw/Mn of an entire polymer is wider than that of the polymer 1. With regard to a method of synthesizing each of the polymers, each of the polymers was synthesized in the same manner as in the case of the polymer 1 except that the initiator sBuLi upon polymerization of the respective arms was changed as shown in Table 5 below. An equivalent molar amount of KOH with respect to the acid value of each of the polymers 14 and 15, and an appropriate amount of water were added to a solution of the polymer in THF, and the mixture was stirred. After that, water was further added to the mixture. Thus, 25% polymer aqueous solutions 14 and 15 were obtained. Table 5 below shows the respective physical properties of the polymers 14 and 15 collectively. It should be noted that Table 5 shows the respective physical properties of the polymer 1 synthesized in the foregoing as well.

Table 5

| | Polymer 1 | Polymer 14 | Polymer 15 |
|---|---|---|---|
| Polymerization initiator | sBuLi | iBuLi | tBuLi |
| Molecular weight distribution of first (co)polymer chain (Mw/Mn) | 1.09 | 1.46 | 1.52 |
| Molecular weight distribution of second (co)polymer chain (Mw/Mn) | 1.11 | 1.43 | 1.58 |
| Number-average molecular weight of entire polymer (Mn) | 5,000 | 5,000 | 5,000 |
| Weight-average molecular weight of entire polymer (Mw) | 5,500 | 7,500 | 7,800 |
| Molecular weight distribution of entire polymer (Mw/Mn) | 1.10 | 1.50 | 1.56 |
| Acid value [mgKOH/g] | 118 | 118 | 118 |

(Polymers 16 to 18)

Polymers 16 to 18 are each a star polymer obtained by changing St which is the aromatic monomer of the polymer 1. Each of the polymers 16 to 18 was synthesized in the same manner as in the case of the polymer 1 except that a monomer shown in Table 6 below was used as an aromatic monomer. It should be noted that the aromatic monomer introduced in the polymer 18 is turned into p-acetylstyrene by a hydrolysis treatment. An equivalent molar amount of KOH with respect to the acid value of each of the polymers 16 to 18 and an appropriate amount of water were added to a solution of the polymer in THF, and the mixture was stirred. After that, water was further added to the mixture. Thus, 25% polymer aqueous solutions 16 to 18 were obtained. Table 6 below shows the respective physical properties

of the polymers 16 to 18 collectively. It should be noted that Table 6 shows the respective physical properties of the polymer 1 synthesized in the foregoing as well.

Table 6

| | Aromatic monomer | Mn | Mw | Mw/Mn | Acid value [mgKOH/g] |
|---|---|---|---|---|---|
| Polymer 1 | St | 5,000 | 5,500 | 1.10 | 118 |
| Polymer 16 | 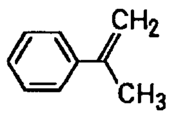 | 4,500 | 5,000 | 1.11 | 118 |
| Polymer 17 | 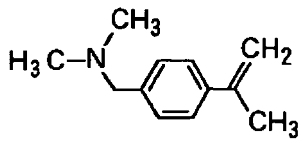 | 4,500 | 5,000 | 1.11 | 118 |
| Polymer 18 | 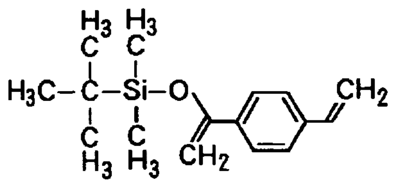 | 4,500 | 5,000 | 1.11 | 118 |
| Mn: number-average molecular weight of entire polymer<br>Mw: weight-average molecular weight of entire polymer<br>Mw/Mn: molecular weight distribution of entire polymer | | | | | |

(Polymers 19 and 20)

Polymers 19 and 20 are each a star polymer obtained by changing tBMA (MAA) which is an acid monomer of the polymer 1. Each of the polymers 19 and 20 was synthesized in the same manner as in the case of the polymer 1 except that a monomer shown below was used as an acid monomer. Because the synthesis of the polymer 1 has three stages, with regard to the composition fraction of St in Table 7 below, the St input fraction at each stage was shown in parentheses. The former is the St amount at the stage of the synthesis of the polymer 1-a, and the latter is the St amount at the stage of the synthesis of the polymer 1. In addition, the acid monomer introduced in the polymer 20 is turned into vinylbenzoic acid by a hydrolysis treatment. An equivalent molar amount of KOH with respect to the acid value of each of the polymers 19 and 20, and an appropriate amount of water were added to a solution of the polymer in THF, and the mixture was stirred. After that, water was further added to the mixture. Thus, 25% polymer aqueous solutions 19 and 20 were obtained. Table 7 below shows the respective physical properties of the polymers 19 and 20 collectively. It should be noted that Table 7 shows the respective physical properties of the polymer 1 synthesized in the foregoing as well.

Table 7

| | | Polymer 1 | Polymer 19 | Polymer 20 |
|---|---|---|---|---|
| Acid monomer | | tBMA(MAA) | tBA(AA) | 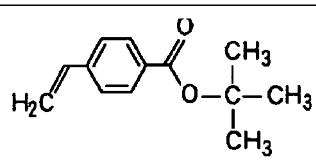<br>(vinylbenzoic acid) |
| Composition fraction in polymer [parts] | Acid monomer | 21 | 21 | 42 |
| | Non-aromatic monomer (nBMA) | 15 | 15 | 15 |
| | Aromatic monomer (St) | 65<br>(23+42) | 65<br>(23+42) | 42<br>(14+28) |

(continued)

| | | Polymer 1 | Polymer 19 | Polymer 20 |
|---|---|---|---|---|
| Acid monomer | | tBMA(MAA) | tBA(AA) | 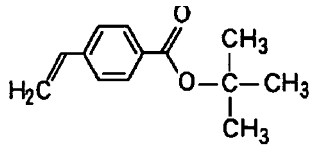 (vinylbenzoic acid) |
| First (co)polymer chain | Number-average molecular weight (Mn) | 2,200 | 2,200 | 1,400 |
| | Molecular weight distribution (Mw/Mn) | 1.09 | 1.09 | 1.10 |
| Second (co)polymer chain | Number-average molecular weight (Mn) | 1800 | 1,800 | 2,700 |
| | Molecular weight distribution (Mw/Mn) | 1.11 | 1.11 | 1.23 |
| Number-average molecular weight of entire polymer (Mn) | | 5,000 | 4,500 | 4,800 |
| Weight-average molecular weight of entire polymer (Mw) | | 5,500 | 5,000 | 6,000 |
| Molecular weight distribution of entire polymer (Mw/Mn) | | 1.10 | 1.11 | 1.25 |
| Acid value [mgKOH/g] | | 118 | 140 | 99 |

(Polymers 21 and 22)

Polymers 21 and 22 are each a star polymer synthesized by employing the method of synthesizing the polymer 9 and having nine arms. The composition fraction between monomers is as shown in Table 8 below. The polymers 21 and 22 each have the following characteristics: the fraction of the aromatic monomer in each first (co)polymer chain is 50% or less, and, because each second (co)polymer chain is obtained by polymerizing nBMA in advance before the polymerization of tBMA as in the case of the polymer 13, no acid monomer is present at a terminal of the star polymer. It should be noted that the polymerization initiator was changed from sBuLi to tBuLi. An equivalent molar amount of KOH with respect to the acid value of each of the polymers 21 and 22 and an appropriate amount of water were added to a solution of the polymer in THF, and the mixture was stirred. After that, water was further added to the mixture. Thus, 25% polymer aqueous solutions 21 and 22 were obtained. Table 8 below shows the respective physical properties of the polymers 21 and 22 collectively. It should be noted that Table 8 shows the respective physical properties of the polymer 9 synthesized in the foregoing as well.

Table 8

| | | | Polymer 9 | Polymer 21 | Polymer 22 |
|---|---|---|---|---|---|
| Composition fraction in polymer [parts] | First (co)polymer chain | Aromatic monomer (St) | 65 | 30 | 30 |
| | | Non-aromatic monomer (Ip) | 0 | 35 | 35 |
| | | Content of aromatic monomer in first (co) polymer chain [%] | 100 | 46 | 46 |
| | Second (co)polymer chain | tBMA | 21 | 21 | 21 |
| | | nBMA | 15 | 15 | 15 |
| Number-average molecular weight of first (co)polymer chain (Mn) | | | 1,300 | 3,900 | 2,600 |

(continued)

| | Polymer 9 | Polymer 21 | Polymer 22 |
|---|---|---|---|
| Number-average molecular weight of second (co)polymer chain (Mn) | 1,000 | 3,000 | 2,000 |
| Number-average molecular weight of entire polymer (Mn) | 6,500 | 17,000 | 11,500 |
| Weight-average molecular weight of entire polymer (Mw) | 7,800 | 27,000 | 18,000 |
| Molecular weight distribution of entire polymer (Mw/Mn) | 1.20 | 1.59 | 1.57 |
| Acid value [mgKOH/g] | 110 | 120 | 120 |

(Polymers 23 and 24)

Polymers 23 and 24 are each a star polymer synthesized by employing the method of synthesizing the polymer 7 and having seven arms. The composition fraction between monomers is as shown in Table 9 below. The polymers 23 and 24 each have the following characteristics: the fraction of the aromatic monomer in each first (co)polymer chain is 50% or less, and, because each second (co)polymer chain is obtained by polymerizing nBMA in advance before the polymerization of tBMA as in the case of the polymer 13, no acid monomer is present at a terminal of the star polymer. It should be noted that the polymerization initiator was changed from sBuLi to tBuLi. An equivalent molar amount of KOH with respect to the acid value of each of the polymers 23 and 24, and an appropriate amount of water were added to a solution of the polymer in THF, and the mixture was stirred. After that, water was further added to the mixture. Thus, 25% polymer aqueous solutions 23 and 24 were obtained. Table 9 below shows the respective physical properties of the polymers 23 and 24 collectively. It should be noted that Table 9 shows the respective physical properties of the polymer 7 synthesized in the foregoing as well.

Table 9

| | | | Polymer 7 | Polymer 23 | Polymer 24 |
|---|---|---|---|---|---|
| Composition fraction in polymer [parts] | First (co)polymer chain | Aromatic monomer (St) | 65 | 30 | 35 |
| | | Non-aromatic monomer (Ip) | 0 | 35 | 30 |
| | | Content of aromatic monomer in first (co) polymer chain [%] | 100 | 46 | 54 |
| | Second (co)polymer chain | tBMA | 21 | 21 | 21 |
| | | nBMA | 15 | 15 | 15 |
| Number-average molecular weight of first (co)polymer chain (Mn) | | | 1,600 | 1,600 | 1,600 |
| Number-average molecular weight of second (co)polymer chain (Mn) | | | 880 | 880 | 880 |
| Number-average molecular weight of entire polymer (Mn) | | | 4,500 | 4,800 | 9,500 |
| Weight-average molecular weight of entire polymer (Mw) | | | 5,300 | 7,600 | 15,000 |
| Molecular weight distribution of entire polymer (Mw/Mn) | | | 1.18 | 1.58 | 1.58 |
| Acid value [mgKOH/g] | | | 116 | 110 | 110 |

(Polymers 25 to 30)

Polymers 25 to 30 are each a star polymer obtained by changing the acid value of the polymer 1. Each of the polymers 25 to 30 was synthesized in the same manner as in the case of the polymer 1 except that the amount of a monomer used at each stage in the method of synthesizing the polymer 1 with three stages was changed. An equivalent molar amount of KOH with respect to the acid value of each of the polymers 25 to 30 and an appropriate amount of water were added to a solution of the polymer in THF, and the mixture was stirred. After that, water was further added to the mixture. Thus, 25% polymer aqueous solutions 25 to 30 were obtained. Table 10 below shows the respective physical properties of the polymers 25 to 30 collectively. It should be noted that Table 10 shows the respective physical properties of the polymer 1 synthesized in the foregoing as well.

Table 10

| | | Polymer | | | | | | |
|---|---|---|---|---|---|---|---|---|
| | | 1 | 25 | 26 | 27 | 28 | 29 | 30 |
| Composition fraction of aromatic monomer (St) used in Stage 1 [parts] | | 23 | 23 | 23 | 23 | 23 | 16 | 16 |
| Composition fractions of monomers used in Stage 2 [parts] | tBMA / nBMA | 21/15 | 13/23 | 14/22 | 17/19 | 25/11 | 42/10 | 43/10 |
| Composition fraction of aromatic monomer (St) used in Stage 3 [parts] | | 42 | 42 | 42 | 42 | 42 | 32 | 31 |
| First (co) polymer chain | Number of chains | 3 | 3 | 3 | 3 | 3 | 3 | 3 |
| | Number-average molecular weight (Mn) | 2,200 | 2,200 | 2,200 | 2,200 | 2,200 | 1,600 | 1,600 |
| | Molecular weight distribution (Mw/Mn) | 1.09 | 1.09 | 1.09 | 1.09 | 1.09 | 1.09 | 1.09 |
| Second (co) polymer chain | Number of chains | 2 | 2 | 2 | 2 | 2 | 2 | 2 |
| | Number-average molecular weight (Mn) | 1,800 | 1,800 | 1,800 | 1,800 | 1,800 | 2,200 | 2,200 |
| | Molecular weight distribution (Mw/Mn) | 1.11 | 1.11 | 1.11 | 1.11 | 1.11 | 1.11 | 1.11 |
| Total number of arms | | 5 | 5 | 5 | 5 | 5 | 5 | 5 |
| Number-average molecular weight of entire polymer (Mn) | | 5,000 | 5,000 | 5,000 | 5,000 | 5,000 | 5,000 | 5,000 |
| Weight-average molecular weight of entire polymer (Mw) | | 5,500 | 5,500 | 5,500 | 5,500 | 5,500 | 5,500 | 5,500 |
| Molecular weight distribution of entire polymer (Mw/Mn) | | 1.10 | 1.10 | 1.10 | 1.10 | 1.10 | 1.10 | 1.10 |
| Acid value [mgKOH/g] | | 118 | 79 | 80 | 100 | 150 | 250 | 251 |

(Polymer 31)

A polymer 31 is a star polymer obtained by changing the monomers of the polymer 1 to only the aromatic monomer and the acid monomer. The polymer 31 was synthesized in the same manner as in the case of the polymer 1 except that the amount of a monomer used at each stage in the method of synthesizing the polymer 1 with three stages was changed. An equivalent molar amount of KOH with respect to the acid value of the polymer 31 and an appropriate amount of water were added to a solution of the polymer in THF, and the mixture was stirred. After that, water was further added to the mixture. Thus, a 25% polymer aqueous solution 31 was obtained. Table 11 below shows the respective physical properties of the polymer 31 collectively. It should be noted that Table 11 shows the respective physical properties of the polymer 1 synthesized in the foregoing as well.

Table 11

| | Polymer | |
|---|---|---|
| | 1 | 31 |
| Composition fraction of aromatic monomer (St) used in Stage 1 [parts] | 23 | 27 |

(continued)

| | | Polymer | |
|---|---|---|---|
| | | 1 | 31 |
| Composition fractions of monomers used in Stage 2 [parts] | | tBMA/nBMA= 21/15 | tBMA=21 |
| Composition fraction of aromatic monomer (St) used in Stage 3 [parts] | | 42 | 53 |
| First (co)polymer chain | Number of chains | 3 | 3 |
| | Number-average molecular weight (Mn) | 2,200 | 2,700 |
| | Molecular weight distribution (Mw/Mn) | 1.09 | 1.09 |
| Second (co)polymer chain | Number of chains | 2 | 2 |
| | Number-average molecular weight (Mn) | 1,800 | 1,050 |
| | Molecular weight distribution (Mw/Mn) | 1.11 | 1.11 |
| Total number of arms | | 5 | 5 |
| Number-average molecular weight of entire polymer (Mn) | | 5,000 | 5,000 |
| Weight-average molecular weight of entire polymer (Mw) | | 5,500 | 5,500 |
| Molecular weight distribution of entire polymer (Mw/Mn) | | 1.10 | 1.10 |
| Acid value [mgKOH/g] | | 118 | 118 |

(Polymer 32)

A polymer 32 is a star polymer used in a comparative example of the present invention, and has three arms. In the synthesis of the polymer 1-b, (co)polymer chains of tBMA and nBMA were synthesized, and then the polymerization was terminated by using 150 parts of the polymer 1-a as a polymerization terminator instead of the BPPE solution. Thus, the polymer 32 having one first (co)polymer chain and two second (co)polymer chains was synthesized. An equivalent molar amount of KOH with respect to the acid value of the polymer 32 and an appropriate amount of water were added to a solution of the polymer in THF, and the mixture was stirred. After that, water was further added to the mixture. Thus, a 25% polymer aqueous solution 32 was obtained. Table 12 below shows the respective physical properties of the polymer 32 collectively.

Table 12

| | | Polymer 32 |
|---|---|---|
| First (co)polymer chain | Number of chains | 1 |
| | Number-average molecular weight (Mn) | 2,200 |
| Second (co)polymer chain | Number of chains | 2 |
| | Number-average molecular weight (Mn) | 600 |
| Total number of arms | | 3 |
| Number-average molecular weight of entire polymer (Mn) | | 3,000 |
| Weight-average molecular weight of entire polymer (Mw) | | 3,600 |
| Molecular weight distribution of entire polymer (Mw/Mn) | | 1.20 |
| Acid value [mgKOH/g] | | 117 |

(Polymer 33)

A polymer 33 is a star polymer used in a comparative example of the present invention. The polymer has the following characteristics: the monomer of which an arm is formed is not formed of an $\alpha,\beta$-ethylenically unsaturated monomer, and further, the (co)polymer chain of which the star polymer is formed contains neither the aromatic monomer nor the acid monomer or the salt thereof. The polymer was produced in accordance with the method described in Example 1 of Japanese Patent Application Laid-Open No. 2001-40256. The central compound obtained by isolating the central skeleton of the polymer is trihydroxybenzene, the monomer of which each arm is formed is ethylene oxide, and the

number of arms is three. A 25% polymer aqueous solution 33 was obtained by adding water to the polymer 33. Table 13 below shows the respective physical properties of the polymer 33 collectively.

Table 13

| | Polymer 33 |
|---|---|
| Number-average molecular weight of entire polymer (Mn) | 2,500 |
| Weight-average molecular weight of entire polymer (Mw) | 3,500 |
| Molecular weight distribution of entire polymer (Mw/Mn) | 1.40 |
| Absolute molecular weight | 3,100 |
| Number-average molecular weight of arm (Mn) | 1,000 |
| Acid value [mgKOH/g] | None |

(Polymer 34)

A polymer 34 is a star polymer used in a comparative example of the present invention. The polymer has the following characteristics: the (co)polymer chain of which the star polymer is formed contains neither the aromatic monomer nor the acid monomer or a monomer formed of the salt thereof. The polymer was produced in accordance with the method described in Example 15 of Japanese Patent Application Laid-Open No. 2001-40256. The central compound obtained by isolating the central skeleton of the polymer is TMMP, the monomer of which each arm is formed is N,N-dimethylacrylamide, and the number of arms is three. A 25% polymer aqueous solution 34 was obtained by adding water to the polymer 34. Table 14 below shows the respective physical properties of the polymer 34 collectively.

Table 14

| | Polymer 34 |
|---|---|
| Number-average molecular weight of entire polymer (Mn) | 1,000 |
| Weight-average molecular weight of entire polymer (Mw) | 1,500 |
| Molecular weight distribution of entire polymer (Mw/Mn) | 1.50 |
| Absolute molecular weight | 1,300 |
| Number-average molecular weight of arm (Mn) | 300 |
| Acid value [mgKOH/g] | None |

(Polymer 35)

A polymer 35 is a star polymer used in a comparative example of the present invention. The polymer has the following characteristic: the (co)polymer chain of which the star polymer is formed contains neither the aromatic monomer nor the acid monomer or the salt thereof. The polymer was produced in accordance with the method described in Reference Example 1 of Japanese Patent Application Laid-Open No. 9-249709. The central compound obtained by isolating the central skeleton of the polymer is PEMG, the monomers of which each arm is formed are n-butyl acrylate, 2-ethylhexyl acrylate, and 2-hydroxyethyl acrylate, and the number of arms is four. An equivalent molar amount of KOH with respect to the acid value of the polymer 35 and an appropriate amount of water were added to a solution of the polymer in ethyl acetate, and the mixture was stirred. After that, ethyl acetate was removed under a reduced pressure condition, and further, water was added to the remainder. Thus, a 25% polymer aqueous solution 35 was obtained. Table 15 below shows the respective physical properties of the polymer 35 collectively.

Table 15

| | Polymer 35 |
|---|---|
| Number-average molecular weight of entire polymer (Mn) | 4,500 |
| Weight-average molecular weight of entire polymer (Mw) | 6,800 |
| Molecular weight distribution of entire polymer (Mw/Mn) | 1.51 |
| Absolute molecular weight | 11,300 |

(continued)

| | Polymer 35 |
|---|---|
| Number-average molecular weight of arm (Mn) | 2,700 |
| Acid value [mgKOH/g] | None |

(Polymer 36)

A polymer 36 is a polymer used in a comparative example of the present invention, and the synthesized polymer is not a star polymer, though the polymer contains a star polymer as a raw material. In other words, such a (co)polymer chain of which the star polymer is formed as used in the present invention contains neither the aromatic monomer nor the acid monomer or the salt thereof. The polymer was produced in accordance with the method described in Production Example 1 of Japanese Patent Application Laid-Open No. 59-124922. The polymer synthesized by the following procedure is not a star polymer: the molecules of a pentaerythritol polymer which is a star polymer are crosslinked with an isophorone-type isocyanate, and phthalic anhydride is added to a hydroxyl group of the pentaerythritol polymer. An equivalent molar amount of KOH with respect to the acid value of the polymer 36 and an appropriate amount of water were added to the polymer, and the mixture was stirred. After that, water was further added to the mixture. Thus, a 25% polymer aqueous solution 36 was obtained. Table 16 below shows the respective physical properties of the polymer 36 collectively.

Table 16

| | Polymer 36 |
|---|---|
| Number-average molecular weight of entire polymer (Mn) | 1,100 |
| Weight-average molecular weight of entire polymer (Mw) | 2,400 |
| Molecular weight distribution of entire polymer (Mw/Mn) | 2.18 |
| Absolute molecular weight | 11,300 |
| Number-average molecular weight of arm (Mn) | Unknown |
| Acid value [mgKOH/g] | 20 |

(Polymer 37)

A polymer 37 is a star polymer used in a comparative example of the present invention. This star polymer does not have any central compound that can be isolated, and the (co)polymer chain of which the star polymer is formed does not contain any aromatic monomer. The polymer was produced in accordance with the method of synthesizing a star polymer 1 described in Japanese Patent Application Laid-Open No. 2000-169771. Monomers of which each arm is formed are BMA which is neither an aromatic (meth)acrylate nor an aromatic (meth)acrylamide, and methacrylic acid (MAA). In addition, the star polymer is obtained by crosslinking the molecules of ethylene glycol dimethacrylate (EGDMA) polymerized to one terminal of each arm. The number of arms cannot be uniquely determined because the number cannot be controlled to have a distribution. An equivalent molar amount of KOH with respect to the acid value of the polymer 37 and an appropriate amount of water were added to a solution of the polymer in THF, and the mixture was stirred. After that, THF was removed under a reduced pressure condition, and further, water was added to the remainder. Thus, a 25% polymer aqueous solution 37 was obtained. Table 17 below shows the respective physical properties of the polymer 37 collectively.

Table 17

| | Polymer 37 |
|---|---|
| Number-average molecular weight of entire polymer (Mn) | 20,000 |
| Weight-average molecular weight of entire polymer (Mw) | 28,000 |
| Molecular weight distribution of entire polymer (Mw/Mn) | 1.40 |
| Absolute molecular weight | 80,000 |
| Number-average molecular weight of (co)polymer chain (Mn) | 5,000 |
| Acid value [mgKOH/g] | 110 |

(Polymer 38)

A polymer 38 is a linear polymer used in a comparative example of the present invention. The polymer was synthesized by living anion polymerization in order that its molecular weight distribution was 1.5 or less. The synthesis was performed with reference to the method described in "New Polymer Experiment 2", Synthesis and Reaction of Polymer (1) Synthesis of Addition Polymer, edited by the Society of Polymer Science. The monomer composition of the linear polymer is as shown in Table 18 below, and the polymer contains benzyl methacrylate as an aromatic monomer and tBMA as an acid monomer.

Upon polymerization, an experimental apparatus and an experimental procedure adopted were those of Experimental Example 2.4.1 described on page 212 of "New Polymer Experiment 2", Synthesis and Reaction of Polymer (1) Synthesis of Addition Polymer, edited by the Society of Polymer Science. The polymerization was performed by using 100 parts of toluene as a solvent and 2 parts of a mixture of sBuLi and tributylaluminum as an initiator at a temperature of -78°C for a reaction time of 24 hours. After the reaction, a mixture of hydrochloric acid and methanol was added to the resultant so that a termination reaction was performed. Simultaneously with the termination reaction, tBMA was subjected to a hydrolysis reaction and turned into MAA. After that, excessive hexane was added to the resultant so that the polymer was precipitated. Then, the polymer was dried in a vacuum. An equivalent molar amount of KOH with respect to the acid value of the polymer and an appropriate amount of water were added to the polymer, and the mixture was stirred. After that, water was further added to the mixture. Thus, a 25% polymer aqueous solution 38 was obtained. Table 18 below shows the respective physical properties of the polymer 38 collectively.

Table 18

| | Polymer 38 |
|---|---|
| Monomers to be copolymerized | BzMA/BMA/tBMA |
| Composition fraction (mass fraction) | 65/15/21 |
| Number-average molecular weight (Mn) | 4,000 |
| Weight-average molecular weight (Mw) | 4,800 |
| Molecular weight distribution (Mw/Mn) | 1.20 |
| Acid value [mgKOH/g] | 98 |

(Polymer 39)

A polymer 39 is a star polymer used in a comparative example of the present invention. The polymer, in which the aromatic monomer is (co)polymerized for each first (co)polymer chain and the acid monomer or the salt thereof is (co)polymerized for each second (co)polymer chain, is obtained by using a polyvalent thiol compound as a central compound and bonding the first (co)polymer chains and the second (co)polymer chains to the sulfur atoms of the thiol groups of the central compound. The polymer was produced in accordance with the synthesis method described in Example 6 of Japanese Patent Application Laid-Open No. 7-179538. An equivalent molar amount of KOH with respect to the acid value of the polymer 39 and an appropriate amount of water were added to the polymer, and the mixture was stirred. After that, water was further added to the mixture. Thus, a 25% polymer aqueous solution 39 was obtained. Table 19 below shows the respective physical properties of the polymer 39 collectively.

Table 19

| | Polymer 39 |
|---|---|
| Number-average molecular weight of first (co)polymer chain (Mn) | 27,000 |
| Number-average molecular weight of second (co)polymer chain (Mn) | 20,000 |
| Number-average molecular weight of entire polymer (Mn) | 92,000 |
| Weight-average molecular weight of entire polymer (Mw) | 310,000 |
| Molecular weight distribution of entire polymer (Mw/Mn) | 3.37 |
| Acid value [mgKOH/g] | 48 |

(Polymer 40)

A polymer 40 is a star polymer used in a comparative example of the present invention. The polymer is a star

polymer in which three (co)polymer chains having different components are bonded to the central skeleton. The polymer was produced in accordance with the synthesis method described in Example 7 of Japanese Patent Application Laid-Open No. 3-190911. Methanol was added to a solution of the polymer 40 in THF so that the polymer was precipitated. Then, the polymer was dried under reduced pressure. An appropriate amount of water was added to the polymer. Thus, a 25% polymer aqueous solution 40 was obtained. Table 20 below shows the respective physical properties of the polymer 40 collectively.

Table 20

| | Polymer 40 |
|---|---|
| Number-average molecular weight of entire polymer (Mn) | 32,000 |
| Weight-average molecular weight of entire polymer (Mw) | 40,000 |
| Molecular weight distribution of entire polymer (Mw/Mn) | 1.25 |
| Acid value [mgKOH/g] | None |

(Polymer 41)

A polymer 41 is a star polymer used in the reference example of the present invention. The polymer is a star polymer synthesized by simultaneously polymerizing (co)polymer chains bonded to the central skeleton. First, 100 parts of MEK were put into a flask provided with a stirring apparatus, a nitrogen-introducing tube, a reflux condenser, and a temperature gauge. Next, a monomer mixed liquid obtained by mixing 65 parts of BzMA, 20 parts of nBMA, and 15 parts of AA, and 20 parts of a hexafunctional thiol DPMP to serve as a central compound were added to the flask. After that, the temperature in the flask was increased to 80°C under a nitrogen atmosphere while the mixture was stirred. After confirming that the temperature in the flask reached 80°C, 0.3 part of V-59 was added to the mixture, and the whole was stirred for 3 hours. After that, 0.1 part of V-59 was further added to the resultant, and the whole was continuously subjected to a reaction for 2 hours. It should be noted that the fact that six arms were bonded to the central skeleton was attributed to the confirmation of the disappearance of the absorption of a thiol (S-H bond) (around 2,570 $cm^{-1}$) with a Raman spectrometer (manufactured by JASCO Corporation). An equivalent molar amount of KOH with respect to the acid value of the polymer 41 and an appropriate amount of water were added to a solution of the polymer 41 in MEK, and the mixture was stirred. After that, MEK was removed under a reduced pressure condition, and further, water was added to the remainder. Thus, a 25% polymer aqueous solution 41 was obtained. Table 21 below shows the respective physical properties of the polymer 41 collectively.

Table 21

| | Polymer 41 |
|---|---|
| Number-average molecular weight of entire polymer (Mn) | 4,000 |
| Weight-average molecular weight of entire polymer (Mw) | 5,000 |
| Molecular weight distribution of entire polymer (Mw/Mn) | 1.25 |
| Number-average molecular weight of (co)polymer chain (Mn) | 800 |
| Acid value [mgKOH/g] | 97 |

<Preparation of pigment dispersion liquids>

(Preparation of black pigment dispersion liquids)

| | |
|---|---|
| Polymer aqueous solution 1 (solid matter content: 25wt%) | 20 parts |
| 2-pyrrolidone | 10 parts |
| Ion-exchanged water | 55 parts |

The above components were mixed, and the mixture was heated to 70°C in a water bath. Then, the mixture was stirred so that the resin component was completely dissolved. Then, 15 parts of carbon black (NIPex 95; manufactured by Degussa) were added to the resultant solution followed by being subjected to premixing for 30 minutes. After that,

the resultant was subjected to a dispersion treatment under the following conditions. Thus, a black pigment dispersion liquid 1 was obtained. Dispersing machine: An ultra-high pressure homogenizer NM2-L200AR (manufactured by YOSHIDA KIKAI CO., LTD.) Treatment pressure: 150 MPa Treatment paths: 10 paths

In addition, black pigment dispersion liquids 2 to 41 were each produced in the same manner as in the black pigment dispersion liquid 1 except that each of the polymer aqueous solutions 2 to 41 was used instead of the polymer aqueous solution 1 of the black pigment dispersion liquid 1.

| | |
|---|---|
| (Preparation of cyan pigment dispersion liquids) | |
| Polymer aqueous solution 1 (solid matter content: 25 wt%) | 20 parts |
| 2-pyrrolidone | 10 parts |
| Ion-exchanged water | 55 parts |

The above components were mixed, and the mixture was heated to 70°C in a water bath. Then, the mixture was stirred so that the resin component was completely dissolved. Then, 15 parts of a cyan pigment (IRGALITE Blue 8700; manufactured by Ciba Specialty Chemicals Inc.) were added to the resultant solution followed by being subjected to premixing for 30 minutes. After that, the resultant was subjected to a dispersion treatment under the following conditions. Thus, a cyan pigment dispersion liquid 1 was obtained. Dispersing machine: A bead mill UAM-015 (product name) (manufactured by KOTOBUKI INDUSTRIES CO., LTD.) Beads used:

Zirconia beads each having a diameter of 0.05 mm Filling rate of beads:
70% (in terms of a bulk specific gravity) Number of revolutions of a rotor:
3,500 Hz

In addition, cyan pigment dispersion liquids 2 to 41 were each produced in the same manner as in the cyan pigment dispersion liquid 1 except that each of the polymer aqueous solutions 2 to 41 was used instead of the polymer aqueous solution 1 of the cyan pigment dispersion liquid 1.

(Preparation of magenta pigment dispersion liquids)

A magenta pigment dispersion liquid 1 was prepared in the same manner as in the above cyan pigment dispersion liquid 1 except that the pigment in the cyan pigment dispersion liquid was changed from the cyan pigment to a magenta pigment (CROMOPHTAL Pink PT; manufactured by Ciba Specialty Chemicals Inc.).

In addition, magenta pigment dispersion liquids 2 to 41 were each produced in the same manner as in the magenta pigment dispersion liquid 1 except that each of the polymer aqueous solutions 2 to 41 was used instead of the polymer aqueous solution 1 of the magenta pigment dispersion liquid 1.

(Preparation of yellow pigment dispersion liquids)

A yellow pigment dispersion liquid 1 was prepared in the same manner as in the above cyan pigment dispersion liquid 1 except that the pigment in the cyan pigment dispersion liquid was changed from the cyan pigment to a yellow pigment (IRGALITE Yellow GS; manufactured by Ciba Specialty Chemicals Inc.).

In addition, yellow pigment dispersion liquids 2 to 41 were each produced in the same manner as in the yellow pigment dispersion liquid 1 except that each of the polymer aqueous solutions 2 to 41 was used instead of the polymer aqueous solution 1 of the yellow pigment dispersion liquid 1.

<Preparation of inks>

(Preparation of black inks (Bk))

A black ink 1 was obtained by mixing the following respective components including the black pigment dispersion liquid 1 described above.

| | |
|---|---|
| Black pigment dispersion liquid 1 (5 parts in terms of pigment concentration) | 33 parts |
| Glycerin | 10 parts |
| Ethylene glycol | 5 parts |
| PEG 1,000 | 5 parts |
| AE 100 | 0.5 part |
| Ion-exchanged water | 46.5 parts |

In addition, black inks 2 to 41 were each prepared in the same manner as in the black ink 1 except that each of the black pigment dispersion liquids 2 to 41 was used instead of the black pigment dispersion liquid 1 of the black ink 1.

(Preparation of cyan inks (C))

A cyan ink 1 was prepared in the same manner as in the black ink 1 except that the black pigment dispersion

liquid 1 in the black ink 1 was changed to the cyan pigment dispersion liquid 1.

In addition, cyan inks 2 to 41 were each prepared in the same manner as in the cyan ink 1 except that each of the cyan pigment dispersion liquids 2 to 41 was used instead of the cyan pigment dispersion liquid 1 of the cyan ink 1.

(Preparation of magenta inks (M))

A magenta ink 1 was prepared in the same manner as in the black ink 1 except that the black pigment dispersion liquid 1 in the black ink 1 was changed to the magenta pigment dispersion liquid 1.

In addition, magenta inks 2 to 41 were each prepared in the same manner as in the magenta ink 1 except that each of the magenta pigment dispersion liquids 2 to 41 was used instead of the magenta pigment dispersion liquid 1 of the magenta ink 1.

(Preparation of yellow inks (Y))

A yellow ink 1 was prepared in the same manner as in the black ink 1 except that the black pigment dispersion liquid 1 in the black ink 1 was changed to the yellow pigment dispersion liquid 1.

In addition, yellow inks 2 to 41 were each prepared in the same manner as in the yellow ink 1 except that each of the yellow pigment dispersion liquids 2 to 41 was used instead of the yellow pigment dispersion liquid 1 of the yellow ink 1.

<Evaluation of inks>

(Ejection stability)

Each of the black, cyan, magenta, and yellow inks obtained in the foregoing was put into an ink cartridge, and the ink cartridge was mounted on an ink jet recording apparatus PIXUS iP4100 (manufactured by Canon Inc.). Then, a solid image having a recording duty of 100% was recorded on a Canon Plain Paper White SW-101 (manufactured by Canon Inc.) with each of the black, cyan, magenta, and yellow inks while the recording mode of the apparatus was set to a plain paper/standard mode. Thus, a recorded article was produced. A total of 2,000 similar recorded articles were continuously produced.

Then, optical density in a solid image portion formed with each ink was measured for each of the first and 2,000-th recorded articles. Each ink was evaluated for its ejection stability by determining the ratio $R_{OD}=OD_2/OD_1$ from the optical density $OD_1$ in the first recorded article and the optical density $OD_2$ in the 2,000-th recorded article. Each optical density was measured with a reflection densitometer RD-19I (manufactured by Gretag Macbeth Co.). Evaluation criteria for the ejection stability are as described below. Table 22 shows the results of the evaluation. It should be noted that an ink excellent in ejection stability has an $R_{OD}$ close to 1 because there is no significant difference between the optical densities in the first and 2,000-th recorded articles.

A: $0.95<R_{OD}$
B: $0.9<R_{OD}\leq 0.95$
C: $0.8<R_{OD}\leq 0.9$
D: $0.6<R_{OD}\leq 0.8$
E: $R_{OD}\leq 0.6$ 6

(Drying resistance)

First, average particle size $D_{50-1}$ of the pigment in each of the black, cyan, magenta, and yellow inks obtained in the foregoing was measured. The average particle size (volume-average particle size) $D_{50}$ of each pigment was measured with a Nanotrac particle size distribution measuring apparatus UPA-EX150 (manufactured by NIKKISO CO., LTD.). In addition, 2 mL of each of the black, cyan, magenta, and yellow inks obtained in the foregoing was put into a dish having a diameter of 20 mm. After the dish had been dried in a thermostatic bath having a temperature of 60°C for 24 hours, ion-exchanged water was put into the dish so that the pigment was re-dispersed. The average particle size $D_{50-2}$ of the pigment in the resultant liquid was measured with the same apparatus as that described above.

Each ink was evaluated for its drying resistance by determining the ratio $R=D_{50-2}/D_{50-1}$ from the resultant values $D_{50-1}$ and $D_{50-2}$. Evaluation criteria for the drying resistance are as described below. Table 22 shows the results of the evaluation. It should be noted that the drying resistance of an ink is a measure of the difficulty to cause the agglomeration of particles in the ink due to drying when the ink present in a nozzle of a recording head is left to stand.

A: $R<1.1$
B: $1.1\leq R<1.2$
C: $1.2\leq R<1.5$
D: $1.5\leq R<2.0$
E: $2.0\leq R$

(Storage stability)

First, average particle size $D_{50-1}$ of the pigment in each of the black, cyan, magenta, and yellow inks obtained in the foregoing was measured. The average particle size (volume-average particle size) $D_{50}$ of each pigment was

measured with a Nanotrac particle size distribution measuring apparatus UPA-EX150 (manufactured by NIKKISO CO., LTD.). In addition, each of the black, cyan, magenta, and yellow inks obtained in the foregoing was stored in a thermostatic bath having a temperature of 80°C for 1 week, and after that, the average particle size $D_{50-2}$ of the pigment in each of the inks was measured with the same apparatus as that described above. Each ink was evaluated for its storage stability by determining the ratio $R=D_{50-2}/D_{50-1}$ from the resultant values $D_{50-1}$ and $D_{50-2}$. Evaluation criteria for the storage stability are as described below. Table 22 shows the results of the evaluation.

A: $0.95 \leq R < 1.1$
B: $0.90 \leq R < 0.95$, or $1.1 \leq R < 1.2$
C: $0.85 \leq R < 0.90$, or $1.2 \leq R < 1.5$
D: $0.7 \leq R < 0.85$, or $1.5 \leq R < 2.0$
E: $R < 0.7$, or $2.0 \leq R$

In the above three kinds of evaluation items, evaluation criteria A to C were defined as acceptable levels, and evaluation criteria D and E were defined as unacceptable levels.

Table 22-1

| | #Polymerin each ink | Ejection stability | | | | Drying resistance | | | | Storage stability | | | |
|---|---|---|---|---|---|---|---|---|---|---|---|---|---|
| | | Bk | C | M | Y | Bk | C | M | Y | Bk | C | M | Y |
| Example 1 | 1 | A | A | A | A | A | A | A | A | A | A | A | A |
| Example 2 | 2 | B | B | B | B | B | B | B | B | B | B | B | B |
| Example 3 | 3 | A | A | A | B | A | A | A | B | A | A | A | B |
| Example 4 | 4 | A | A | A | B | A | A | A | B | A | A | A | A |
| Example 5 | 5 | B | B | B | B | B | B | B | B | B | B | B | B |
| Example 6 | 6 | A | A | A | A | A | A | A | A | A | A | A | A |
| Example 7 | 7 | A | A | A | A | A | A | A | A | A | A | A | A |
| Example 8 | 8 | A | A | A | B | A | A | A | B | A | A | A | A |
| Example 9 | 9 | B | B | B | B | B | B | B | B | B | B | B | B |
| Example 10 | 10 | B | B | B | B | B | B | B | B | B | B | B | B |
| Example 11 | 11 | A | A | A | B | A | A | A | B | A | A | A | A |
| Example 12 | 12 | A | A | A | A | A | A | A | A | A | A | A | A |
| Example 13 | 13 | B | B | B | B | B | B | B | B | B | B | B | B |
| Example 14 | 14 | B | B | B | B | B | A | A | B | A | A | A | B |
| Example 15 | 15 | B | B | B | B | B | B | B | B | B | B | B | B |
| Example 16 | 16 | A | A | A | B | A | A | A | B | A | A | A | B |
| Example 17 | 17 | B | B | B | A | B | A | A | A | B | B | B | A |
| Example 18 | 18 | A | A | A | B | A | A | A | A | A | A | A | B |
| Example 19 | 19 | A | A | A | A | A | A | A | A | A | A | A | A |

(continued)

| | #Polymer in each ink | Ejection stability | | | | Drying resistance | | | | Storage stability | | | |
|---|---|---|---|---|---|---|---|---|---|---|---|---|---|
| | | Bk | C | M | Y | Bk | C | M | Y | Bk | C | M | Y |
| Example 20 | 20 | A | A | A | B | A | A | A | A | A | A | A | B |
| Example 21 | 21 | C | C | C | C | C | C | C | C | B | C | C | C |
| Example 22 | 22 | C | C | C | C | C | C | C | C | B | B | C | C |
| Example 23 | 23 | C | C | C | C | C | C | C | C | B | B | B | B |
| Example 24 | 24 | C | C | C | C | B | B | B | B | B | B | B | B |
| Example 25 | 25 | B | B | B | B | B | B | B | B | B | B | B | B |
| Example 26 | 26 | B | B | B | B | A | A | A | A | A | A | A | A |
| Example 27 | 27 | A | A | A | A | A | A | A | A | A | A | A | A |
| Example 28 | 28 | A | A | A | A | A | A | A | A | A | A | A | A |
| Example 29 | 29 | A | A | A | A | A | A | A | A | B | B | B | B |
| Example 30 | 30 | A | A | A | A | B | B | B | B | B | B | B | B |
| Example 31 | 31 | A | A | A | A | A | A | A | A | A | A | A | A |

Table 22-2

| | #Polymer in each ink | Ejection stability | | | | Drying resistance | | | | Storage stability | | | |
|---|---|---|---|---|---|---|---|---|---|---|---|---|---|
| | | Bk | C | M | Y | Bk | C | M | Y | Bk | C | M | Y |
| Comparative Example 1 | 32 | C | C | C | C | D | D | D | D | C | C | D | D |
| Comparative Example 2 | 33 | E | E | E | E | E | E | E | E | E | E | E | E |
| Comparative Example 3 | 34 | E | E | E | E | E | E | E | E | E | E | E | E |
| Comparative Example 4 | 35 | - (*1) | - (*1) | - (*1) | - (*1) | - (*1) | - (*1) | - (*1) | - (*1) | - (*1) | - (*1) | - *1) | - (*1) |
| Comparative Example 5 | 36 | E | E | E | E | D | D | D | D | E | E | E | E |
| Comparative Example 6 | 37 | E | E | E | E | E | E | E | E | E | E | E | E |
| Comparative Example 7 | 38 | E | E | E | E | B | B | B | B | C | C | C | C |

(continued)

| | #Polymer in each ink | Ejection stability | | | | Drying resistance | | | | Storage stability | | | |
|---|---|---|---|---|---|---|---|---|---|---|---|---|---|
| | | Bk | C | M | Y | Bk | C | M | Y | Bk | C | M | Y |
| Comparative Example 8 | 39 | E | E | E | E | D | D | D | D | E | E | E | E |
| Comparative Example 9 | 40 | E | E | E | E | D | D | D | D | D | D | D | D |
| Reference Example 1 | 41 | C | C | C | C | C | C | C | C | C | C | C | C |
| (*1) Unable to disperse | | | | | | | | | | | | | |

<Preparation of reaction liquid>

The following respective components were mixed, and the mixture was filtrated. Thus, a reaction liquid was prepared.

| | |
|---|---|
| Diethylene glycol | 10.0 parts |
| Methyl alcohol | 5.0 parts |
| Magnesium nitrate | 3.0 parts |
| AE 100 | 0.1 part |
| Ion-exchanged water | 81.9 parts |

<Evaluation of set of ink and reaction liquid>

The reaction liquid obtained in the foregoing, and the black ink 1, the cyan ink 1, the magenta ink 1, and the yellow ink 1 were combined. Thus, a set of the inks and the reaction liquid was obtained. The reaction liquid of which the set was formed was applied to a Canon Plain Paper White SW-101 (manufactured by Canon Inc.) in advance. After that, the black ink 1, the cyan ink 1, the magenta ink 1, and the yellow ink 1 were subjected to recording so that the reaction liquid and each ink contacted each other. Thus, a recorded article was produced.

In a recorded article (solid image having a recording duty of 100%) produced under the same conditions as those in the case of a recorded article produced at the time of the above evaluation for ejection stability, the optical density of an image formed with the black ink and the hue of an image formed with a color ink were measured. To be specific, the optical density OD of an image portion formed with the black ink was measured with a reflection densitometer RD-19I (manufactured by Gretag Macbeth). Evaluation for the optical density was performed on the basis of the resultant OD. It should be noted that the higher the optical density OD, the denser the image. In addition, values a* and b* in the L*a*b* colorimetric system, which is a color difference representation method stipulated by CIE, were measured for an image portion formed with the color ink with a reflection densitometer RD-19I (manufactured by Gretag Macbeth), and a chroma C* defined by the following equation was calculated. Evaluation for chroma was performed on the basis of the resultant C*. It should be noted that the larger the chroma C*, the higher the color developing performance of the image portion. Table 23 shows the results of the evaluation.

$$C^* = \{(a^*)^2 + (b^*)^2\}^{1/2}$$

Table 23

| | Chroma | | | Optical density |
|---|---|---|---|---|
| | Cyan ink | Magenta ink | Yellow ink | Black ink |
| Example 32 | 56 | 67 | 90 | 1.6 |

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

Provided is an ink jet ink capable of achieving at a high level both ejection stability and storage stability. Provided is an ink jet ink, including at least a pigment, and a star polymer in which four or more (co)polymer chains of an α,β-ethylenically unsaturated monomer are bonded to a central skeleton. The (co)polymer chains have two or more first (co)polymer chains each containing at least an aromatic monomer unit and two or more second (co)polymer chains each containing at least one monomer unit selected from the group consisting of acid monomers and salts of the acid monomers.

## Claims

**1.** An ink jet ink, comprising at least:

a pigment; and
a star polymer in which four or more (co)polymer chains of α,β-ethylenically unsaturated monomers are bonded to a central skeleton,
wherein the (co)polymer chains have two or more first (co)polymer chains each containing at least an aromatic monomer unit and two or more second (co)polymer chains each containing at least one monomer unit selected from the group consisting of acid monomers and salts of the acid monomers, and
wherein the star polymer has structures represented by the following formulae X and Y, where A in the following formula X represents the first (co)polymer chains, and B in the following formula Y represents the second (co) polymer chains:

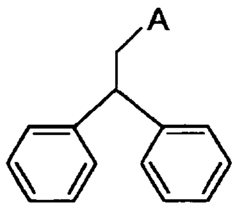
X

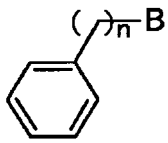
Y

where n represents an integer of 1 to 4.

**2.** An ink jet ink according to claim 1, wherein the central skeleton has a structure obtained by removing A and B from the structures represented by the formulae X and Y.

**3.** An ink jet ink according to claim 1 or 2, wherein the first (co)polymer chains and the second (co)polymer chains each have a number-average molecular weight of 400 or more and 3,000 or less.

**4.** An ink jet ink according to any one of claims 1 to 3, wherein a total number of the first (co)polymer chains and the second (co)polymer chains is four or more and eight or less.

**5.** An ink jet ink according to any one of claims 1 to 4, wherein a mass fraction of the aromatic monomer unit of the first (co)polymer chains is 50.0 mass% or more with reference to all monomer units of which the first (co)polymer chains are formed.

**6.** An ink jet ink according to any one of claims 1 to 5, wherein the second (co)polymer chains have at least one monomer unit selected from the group consisting of acid monomers and salts of the acid monomers at least at a terminal thereof which is opposite to a terminal at which the chains are bonded to the central skeleton.

**7.** An ink jet ink according to any one of claims 1 to 6, wherein a mass fraction of the aromatic monomer unit in the polymer is 30.0 mass% or more and 85.0 mass% or less with reference to a total mass of the polymer.

**8.** An ink jet ink according to any one of claims 1 to 7, wherein the polymer has an acid value of 80 mgKOH/g or more and 250 mgKOH/g or less.

**9.** An ink jet ink according to any one of claims 1 to 8, wherein a molecular weight distribution of the polymer obtained by gel permeation chromatography (GPC) in terms of polystyrene satisfies: 1.0≤(weight-average molecular weight

in terms of polystyrene Mw)/(number-average molecular weight in terms of polystyrene Man) ≤1.5.

**10.** An ink jet recording method comprising ejecting ink according to an ink jet system to perform recording on a recording medium, wherein the ink used in the ink jet recording method is the ink jet ink according to any one of claims 1 to 9.

**11.** An ink cartridge comprising an ink storage portion for storing ink, wherein the ink stored in the ink storage portion is the ink jet ink according to any one of claims 1 to 9.

## Patentansprüche

**1.** Tintestrahltinte, die zumindest umfasst:

ein Pigment; und
ein Sternpolymer, in welchem vier oder mehr (Co)polymerketten von α, β-ethylenisch ungesättigten Monomeren an ein Zentralgerüst gebunden sind,
wobei die (Co)polymerketten zwei oder mehr erste (Co)polymerketten, die jeweils zumindest eine aromatische Monomereinheit enthalten, und zwei oder mehr zweite (Co)polymerketten, die jeweils zumindest eine Monomereinheit ausgewählt aus der Gruppe bestehend aus Säuremonomeren und Salzen der Säurenmonomere enthalten, aufweisen, und
wobei das Sternpolymer Strukturen aufweist, die durch die folgenden Formeln X und Y dargestellt sind, wobei A in der folgenden Formel X die ersten (Co)polymerketten darstellt und B in der folgenden Formel Y die zweiten (Co)polymerketten darstellt:

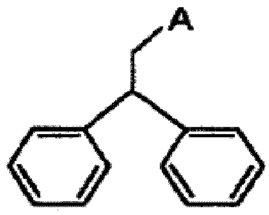
X

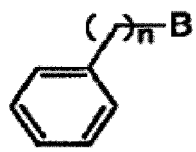
Y

wobei n eine ganze Zahl von 1 bis 4 darstellt.

**2.** Tintenstrahltinte nach Anspruch 1, wobei das Zentralgerüst eine Struktur aufweist, die durch Entfernen von A und B aus den durch die Formeln X und Y dargestellten Strukturen erhalten ist.

**3.** Tintenstrahltinte nach Anspruch 1 oder 2, wobei die ersten (Co)polymerketten und die zweiten (Co)polymerketten jeweils ein gewichtsgemitteltes Molekulargewicht von 400 oder mehr und 3000 oder weniger aufweisen.

**4.** Tintenstrahltinte nach einem der Ansprüche 1 bis 3, wobei eine gesamte Anzahl der ersten (Co)polymerketten und der zweiten (Co)polymerketten vier oder mehr und acht oder weniger beträgt.

**5.** Tintenstrahltinte nach einem der Ansprüche 1 bis 4, wobei ein Masseanteil der aromatischen Monomereinheit der ersten (Co)polymerketten 50,0 Masse-% oder mehr bezüglich aller Monomereinheiten, aus welchen die ersten (Co) polymerketten gebildet sind, beträgt.

**6.** Tintenstrahltinte nach einem der Ansprüche 1 bis 5, wobei die zweiten (Co)polymerketten zumindest eine Monomereinheit aufweisen ausgewählt aus der Gruppe bestehend aus Säuremonomeren und Salzen der Säuremonomere, zumindest an einem Ende davon, welches dem Ende entgegensteht, an welchem die Ketten an das Zentralgerüst gebunden sind.

**7.** Tintenstrahltinte nach einem der Ansprüche 1 bis 6, wobei ein Masseanteil der aromatischen Monomereinheit in dem Polymer 30,0 Masse-% oder mehr und 85,0 Masse-% oder weniger bezüglich der gesamten Masse des Polymers beträgt.

**8.** Tintenstrahltinte nach einem der Ansprüche 1 bis 7, wobei das Polymer einen Säurewert von 80 mgKOH/g oder mehr und 250 mgKOH/g oder weniger aufweist.

**9.** Tintenstrahltinte nach einem der Ansprüche 1 bis 8, wobei eine Molekulargewichtsverteilung des Polymers, die durch Gelpermeationschromatographie (GPC) bezogen auf Polystyrol erhalten ist, erfüllt: 1,0 ≤ (gewichtsgemitteltes Molekulargewicht bezogen auf Polystyrol Mw) / (zahlengemitteltes Molekulargewicht bezogen auf Polystyrol Mn) ≤ 1,5.

**10.** Tintenstrahlaufzeichnungsverfahren, umfassend das Ausstoßen von Tinte gemäß einem Tintenstrahlsystem, um eine Aufzeichnung auf ein Aufzeichnungsmedium durchzuführen, wobei die in den Tintenstrahlaufzeichnungsverfahren verwendete Tinte die Tintenstrahltinte nach einem der Ansprüche 1 bis 9 ist.

**11.** Tintenkartusche, die einen Tintenspeicherabschnitt zum Speichern von Tinte umfasst, wobei die in den Tintenspeicherabschnitt gespeicherte Tinte die Tintenstrahltinte nach einen der Ansprüche 1 bis 9 ist.

## Revendications

**1.** Encore pour jet d'encre, comprenant au moins :

un pigment ; et
un polymère en étoile dans lequel quatre ou plus de quatre chaînes (co)polymères de monomères à insaturation $\alpha,\beta$-éthylénique sont liées à un squelette central,
dans laquelle les chaînes (co)polymères comportent deux ou plus de deux premières chaînes (co)polymères contenant chacune au moins un motif monomère aromatique et deux ou plus de deux secondes chaînes (co) polymères contenant chacune au moins un motif monomère choisi dans le groupe consistant en des monomères acides et des sels des monomères acides, et
dans laquelle le polymère en étoile a des structures représentées par les formules X et Y suivantes, A dans la formule X suivante représentant les premières chaînes (co)polymères, et B dans la formule Y suivante représentant les secondes chaînes (co)polymères :

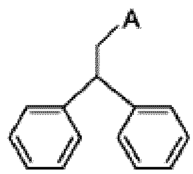
X

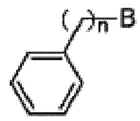
Y

où n représente un nombre entier de 1 à 4.

**2.** Encre pour jet d'encre suivant la revendication 1, dans laquelle le squelette central a une structure obtenue en éliminant A et B des structures représentées par les formules X et Y.

**3.** Encre pour jet d'encre suivant la revendication 1 ou 2, dans laquelle les premières chaînes (co)polymères et les secondes chaînes (co)polymères ont chacune une moyenne en nombre du poids moléculaire comprise entre une valeur égale ou supérieure à 400 et une valeur égale ou inférieure à 3000.

**4.** Encre pour jet d'encre suivant l'une quelconque des revendications 1 à 3, dans laquelle le nombre total des premières chaînes (co)polymères et des secondes chaînes (co)polymères est compris entre une valeur égale ou supérieure à 4 et une valeur égale ou inférieure à 8.

**5.** Encre pour jet d'encre suivant l'une quelconque des revendications 1 à 4, dans laquelle la fraction en masse du motif monomère aromatique des premières chaînes (co)-polymères est égale ou supérieure à 50,0 % en masse par rapport à tous les motifs monomères dont sont formées les premières chaînes (co)polymères.

**6.** Encre pour jet d'encre suivant l'une quelconque des revendications 1 à 5, dans laquelle les secondes chaînes (co) polymères comportent au moins un motif monomère choisi dans le groupe consistant en des monomères acides

et des sels des monomères acides, au moins à une de leur extrémité qui est opposée à une extrémité à laquelle les chaînes sont liées au squelette central.

7. Encre pour jet d'encre suivant l'une quelconque des revendications 1 à 6, dans laquelle la fraction en masse du motif monomère aromatique dans le polymère est comprise entre une valeur égale ou supérieure à 30,0 % en masse et une valeur égale ou inférieure à 85,0 % en masse par rapport à la masse totale du polymère.

8. Encre pour jet d'encre suivant l'une quelconque des revendications 1 à 7, dans laquelle le polymère a un indice d'acide compris entre une valeur égale ou supérieure à 80 mg de KOH/g et une valeur égale ou inférieure à 250 mg de KOH/g.

9. Encre pour jet d'encre suivant l'une quelconque des revendications 1 à 8, dans laquelle la distribution des poids moléculaires du polymère obtenue par chromatographie de perméation sur gel (CPG) sur la base du polystyrène satisfait : 1,0 ≤ (moyenne en poids du poids moléculaire sur la base du polystyrène, Mw) / (moyenne en nombre du poids moléculaire sur la base du polystyrène, Mn) ≤ 1,5.

10. Procédé d'enregistrement par jet d'encre, comprenant l'éjection d'une encre suivant un système à jet d'encre pour effectuer un enregistrement sur un support d'enregistrement, dans lequel l'encre utilisée dans le procédé d'enregistrement par jet d'encre est l'encre pour jet d'encre suivant l'une quelconque des revendications 1 à 9.

11. Cartouche d'encre comprenant une portion de stockage d'encre destinée à stocker une encre, dans laquelle l'encre stockée dans la portion de stockage d'encre est l'encre pour jet d'encre suivant l'une quelconque des revendications 1 à 9.

FIG. 1

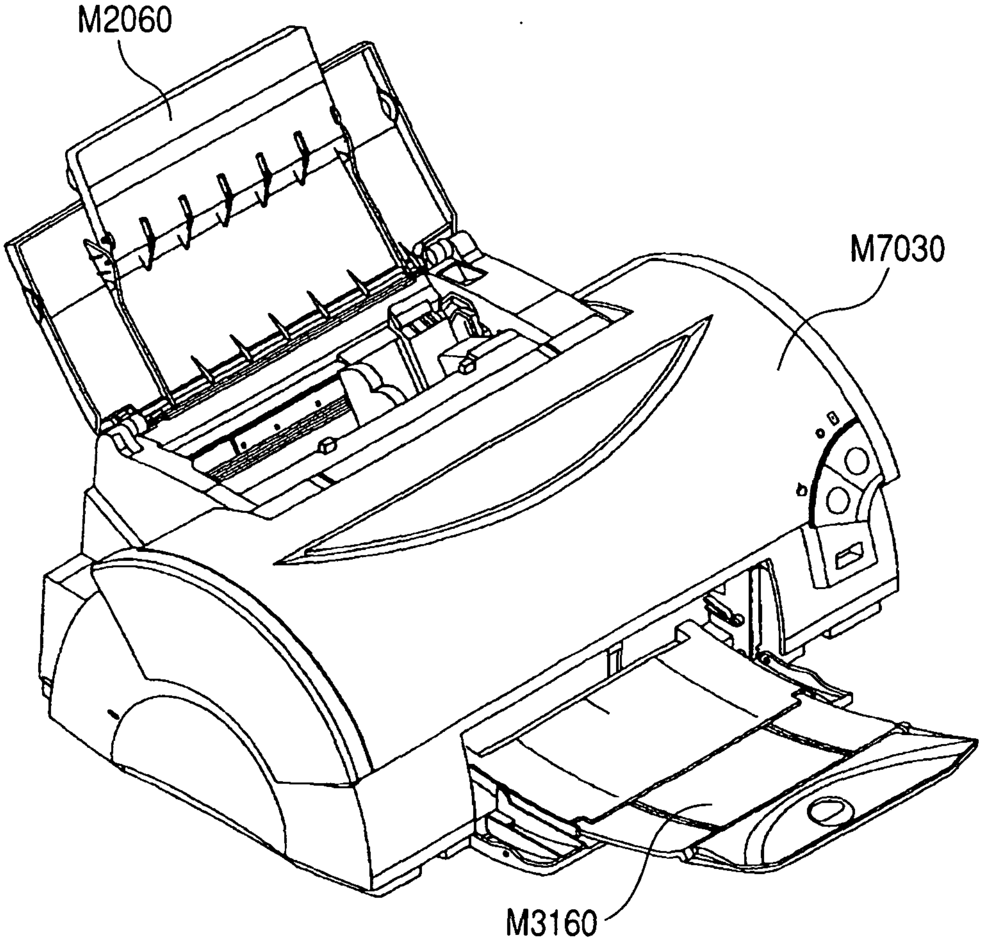

FIG. 2

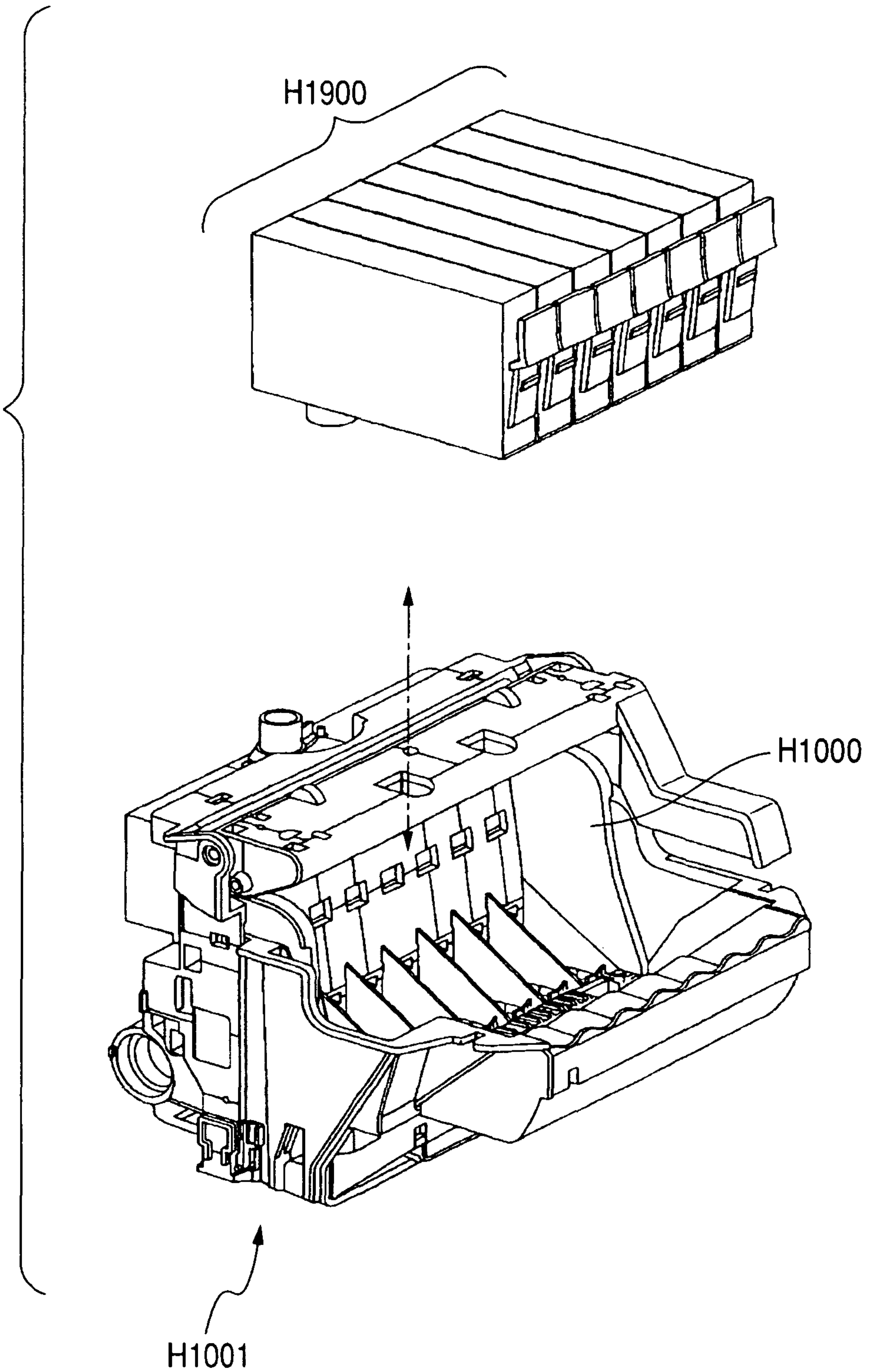

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H03190911 B
- JP H07179538 B
- JP 2000169771 A
- JP 2001040256 A
- JP 9249709 A
- JP 59124922 A
- JP 7179538 A
- JP 3190911 A


### Non-patent literature cited in the description


- *Macromolecules,* 2004, vol. 37, 5179
- *J. Polym. Sci., Part A: Polym. Chem.,* 2006, vol. 44, 6659